# EUROPEAN PATENT SPECIFICATION

(11) **EP 3 664 390 B1**
(45) Date of publication and mention of the grant of the patent: **28.10.2026**
(21) Application number: 18843757.8
(22) Date of filing: 01.08.2018
(51) Int. Cl.: H04J 3/16

(54) **METHOD AND DEVICE FOR PASS-THROUGH OF SERVICE FREQUENCY**
VERFAHREN UND VORRICHTUNG FÜR DURCHGANG VON DIENSTFREQUENZ
PROCÉDÉ ET DISPOSITIF DE TRANSMISSION DE FRÉQUENCE DE SERVICE

(30) Priority: 11.08.2017 CN 201710687136
(43) Date of publication of application: 10.06.2020
(73) Proprietor: Huawei Technologies Co., Ltd., Longgang District Shenzhen, Guangdong 518129 (CN)
(72) Inventor: WANG, Renlei, Shenzhen Guangdong 518129 (CN); ZHANG, Xiaojun, Shenzhen Guangdong 518129 (CN); CHEN, Xingyao, Shenzhen Guangdong 518129 (CN); XIAO, Shuai, Shenzhen Guangdong 518129 (CN)
(74) Representative: Goddar, Heinz J.
(86) International application number: PCT/CN2018/098143
(87) International publication number: WO 2019/029419

(56) References cited:
- EP-A1- 3 242 430
- EP-A1- 3 319 254
- WO-A1-2016/115927
- CN-A- 106 411 454
- CN-A- 106 411 454
- CN-A- 106 612 220
- CN-A- 106 803 814
- US-A1- 2017 005 742

## Description

### TECHNICAL FIELD

This application relates to the transport network field, and more specifically, to a method and device for transparently transmitting a service frequency.

### BACKGROUND

An Optical Internetworking Forum (Optical Internetworking Forum, OIF) proposes a concept of a flexible Ethernet (Flexible Ethernet, FlexE) in a technical proposal released in April 2016, and the FlexE is more widely applied. A FlexE-based bearer network receives various types of services in an application. Some of these services have a requirement for transparently transmitting a frequency, for example, a constant bit rate (Constant Bit Rate, CBR) service such as a common public radio interface (Common Public Radio Interface, CPRI) service and a synchronous digital hierarchy (Synchronous Digital Hierarchy, SDH) service. Currently, the FlexE does not support transparent transmission of a service frequency. Particularly, when a plurality of services has the requirement for transparently transmitting a frequency, and frequencies of these services have different sources, an existing device is hard to implement transparent transmission of a service frequency.
CN 106411454 A discloses a method for data transmission. The method comprises the steps of obtaining constant bit rate (CBR) service data; performing physical coding sublayer (PCS) coding on the CBR service data; inserting a rate adaptation code block into a PCS code stream obtained by the PCS coding for rate adaptation of the PCS code stream; mapping the the PCS rate stream after adaptation into N time slots of a flexible Ethernet (FlexE) frame; and transmitting the FlexE frame, wherein the FlexE overhead of the FlexE frame includes information indicating the N time slots corresponding to the PCS code stream.
WO 2016/115927 A1 discloses a communication method and device, wherein multiple service signals are born in the same bearing domain of the same Ethernet Physical Coding Sub-layer (PCS) channel, and multiple kinds of service signals share Ethernet channel, and thus multiple kinds of service signals share link resources and interface module resources.
CN 106612220 A discloses a flexible Ethernet lane management method. The method comprises the steps of when OAM information of a PCS Lane is acquired, acquiring a target FlexE Client corresponding to the PCS Lane according to a pre-acquired correspondence between the PCS Lane and the FlexE Client; and determining OAM information of the target FlexE Client according to the OAM information of the PCS Lane.

### SUMMARY

This application provides a method and device for transparently transmitting a service frequency in the independent claims, to support a plurality of pieces of service data with a requirement for transparently transmitting a service frequency in simultaneously accessing a link in a FlexE without changing an existing FlexE standard. Possible implementation manners are disclosed in the dependent claims.

According to a first aspect, a method for transparently transmitting a service frequency, applicable to a flexible Ethernet, FlexE, is provided, including: determining, by a first device, first service frequency information Xn, where the first service frequency information Xn is used to indicate an amount of n-bit first service data that is sent by the first device within first statistical duration, a sending frequency of the first device is used as a reference for the first statistical duration, and n is a positive integer, wherein the first statistical duration is determined based on a rate of the first service data; and encapsulating, by the first device, the first service frequency information Xn into a first S/T bit code block, inserting the first S/T bit code block into a data stream of the first service data, and sending the data stream of the first service data to a second device, where S and T are positive integers.

The method for transparently transmitting a service frequency in the first aspect can support a plurality of pieces of service data with a requirement for transparently transmitting a service frequency in simultaneously accessing a link in a FlexE without changing an existing FlexE standard. Because a stuff code block is inserted into a data stream of each service with the requirement for transparently transmitting a service frequency to perform rate matching in the FlexE, inserting the first service frequency information into the data stream of the first service data and properly using bandwidth allocated to the service according to the method in the first aspect does not affect another service.

It should be understood that the n-bit first service data is a unit used to collect statistics about the first service data.

It should be further understood that the first statistical duration is determined based on a rate of the first service data. If the rate of the first service data is lower than a specific threshold, relatively long first statistical duration may be determined, for example, the first statistical duration is longer than a length of a basic frame or a multiframe. If the rate of the first service data is higher than a specific threshold, relatively short first statistical duration may be determined, for example, the first statistical duration is shorter than a length of a basic frame or a multiframe.

It should be further understood that an S/T bit code block may be a 64/66B code block, an 8/10B code block, or the like.

In a possible implementation of the first aspect, the first S/T bit code block is an S/T bit code block identified by O code. In this implementation, the code block in which the first service frequency information Xn is encapsulated is marked by a special identifier, so that a lower-level device can identify and parse the S/T bit code block.

It should be understood that the O code is O code, and a type field (type field) of the O code may be 0x4B. Currently, 0x0 and 0xF are used for O code that has been standardized in 802.3. Currently, O code of a FlexE overhead code block (overhead block) 1 defined in OIF FlexE implementation agreement (Implementation Agreement, IA) 1.0 is 0x5.

In a possible implementation of the first aspect, first statistical duration information is further encapsulated in the first S/T bit code block, and the first statistical duration information is used to indicate the first statistical duration.

In a possible implementation of the first aspect, the first statistical duration is a first target quantity of transmit clock cycles, and the first statistical duration information includes the first target quantity. In this implementation, when the service frequency information is calculated, statistical duration is periodically decoupled from the basic frame and the multiframe, and optimal statistical duration may be accordingly selected based on the service rate, so that the service frequency information obtained through statistics collection is more accurate.

In a possible implementation of the first aspect, the method further includes: determining, by the first device, the first statistical duration based on a rate of the first service data; and the determining, by a first device, first service frequency information Xn includes: collecting, by the first device, statistics about the amount of n-bit first service data that is sent within the first statistical duration. In this implementation, the first device serves as an access node.

In a possible implementation of the first aspect, the method further includes: receiving, by the first device, the data stream of the first service data, where the data stream of the first service data is sent by a third device, and parsing out first service frequency information Yn from a second S/T bit code block of the data stream of the first service data; and the determining, by a first device, first service frequency information Xn includes: calculating, by the first device based on the first service frequency information Yn, the amount of n-bit first service data that is sent within the first statistical duration, to obtain the first service frequency information Xn. In this implementation, the first device serves as an intermediate node, so that this implementation can support a multi-hop cascading networking mode.

In a possible implementation of the first aspect, the first statistical duration information is further encapsulated in the second S/T bit code block, and the first statistical duration information is used to indicate the first statistical duration.

In a possible implementation of the first aspect, the method further includes: determining, by the first device, second service frequency information Wm, where the second service frequency information Wm is used to indicate an amount of m-bit second service data that is sent by the first device within second statistical duration, the sending frequency of the first device is used as a reference for the second statistical duration, and m is a positive integer; and encapsulating, by the first device, the second service frequency information Wm into a third S/T bit code block, inserting the third S/T bit code block into a data stream of the second service data, and sending the data stream of the second service data to the second device. The method in this implementation can support a plurality of pieces of service data with a requirement for transparently transmitting a service frequency in simultaneously accessing a device.

In a possible implementation of the first aspect, the first service frequency information *Xn* = *A*□*F_{client}* / *F_{FlexE},* A is a frequency coefficient, *F_{client}* is a service frequency of the first service data, and *F_{FlexE}* is the sending frequency of the first device.

According to a second aspect, a method for transparently transmitting a service frequency, applicable to a flexible Ethernet, FlexE, is provided, including: receiving, by a fourth device, a data stream of first service data, where the data stream of the first service data is sent by a fifth device, the data stream of the first service data includes a first S/T bit code block, the first S/T bit code block includes first service frequency information Zn, the first service frequency information Zn is used to indicate an amount of n-bit first service data that is sent by the fifth device within first statistical duration, a sending frequency of the fifth device is used as a reference for the first statistical duration, and n, S, and T are positive integers, wherein the first statistical duration is determined based on a rate of the first service data; and recovering, by the fourth device based on the first service frequency information Zn, a clock corresponding to the first service data.

The method for transparently transmitting a service frequency in the second aspect can support a plurality of pieces of service data with a requirement for transparently transmitting a service frequency in simultaneously accessing a link in a FlexE without changing an existing FlexE standard. Because a stuff code block is inserted into a data stream of each service with the requirement for transparently transmitting a service frequency to perform rate matching in the FlexE, inserting the first service frequency information into the data stream of the first service data and properly using bandwidth allocated to the service according to the method in the second aspect does not affect another service.

In a possible implementation of the second aspect, the first S/T bit code block is an S/T bit code block identified by O code.

In a possible implementation of the second aspect, first statistical duration information is further encapsulated in the first S/T bit code block, and the first statistical duration information is used to indicate the first statistical duration; and the recovering, by the fourth device based on the first service frequency information Zn, a clock corresponding to the first service data includes: recovering, by the fourth device based on the first service frequency information Zn and the first statistical duration information, the clock corresponding to the first service data.

In a possible implementation of the second aspect, the first statistical duration is a first target quantity of transmit clock cycles, and the first statistical duration information includes the first target quantity.

In a possible implementation of the second aspect, the method further includes: receiving, by the fourth device, a data stream of second service data, where the data stream of the second service data is sent by the fifth device, the data stream of the second service data includes a second S/T bit code block, the second S/T bit code block includes second service frequency information Vm, the second service frequency information Vm is used to indicate an amount of n-bit second service data that is sent by the fifth device within second statistical duration, the sending frequency of the fifth device is used as a reference for the second statistical duration, and m is a positive integer; and recovering, by the fourth device based on the second service frequency information Vm, a clock corresponding to the second service data.

In a possible implementation of the second aspect, the first service frequency information *Zn* = *A*□*F_{client}* / *F_{FlexE},* A is a frequency coefficient, *F_{client}* is a service frequency of the first service data, and *F_{FlexE}* is the sending frequency of the fifth device.

According to a third aspect, a device for transparently transmitting a service frequency, applicable to a flexible Ethernet, FlexE, is provided. The device is a first device, and is configured to perform the method according to any one of the first aspect or the possible implementations of the first aspect. Specifically, the device for transparently transmitting a service frequency may include units configured to perform the method according to any one of the first aspect or the possible implementations of the first aspect.

According to a fourth aspect, a device for transparently transmitting a service frequency, applicable to a flexible Ethernet, FlexE, is provided. The device is a fourth device, and is configured to perform the method according to any one of the second aspect or the possible implementations of the second aspect. Specifically, the device for transparently transmitting a service frequency may include units configured to perform the method according to any one of the second aspect or the possible implementations of the second aspect.

Effects that can be obtained according to the second aspect to the tenth aspect correspond to the effects that can be obtained according to the first aspect. Details are not described herein again.

### BRIEF DESCRIPTION OF DRAWINGS

FIG. 1 is a schematic diagram of a FlexE architecture according to an embodiment of this application;
FIG. 2A and FIG. 2B are a schematic diagram of a code block on a PHY link according to an embodiment of this application;
FIG. 3A, FIG. 3B, and FIG. 3C are a schematic diagram of an overhead code block in a FlexE basic frame according to an embodiment of this application;
FIG. 4 is a schematic diagram of a service clock loss in a process of transmitting service data in a FlexE;
FIG. 5 is a schematic diagram of a circuit that is used to map service data in an OTN;
FIG. 6 is a schematic diagram of a circuit that is used to demap service data in an OTN;
FIG. 7 is a schematic diagram of a synchronous Ethernet technology in a FlexE;
FIG. 8 is a schematic diagram of transparently transmitting a service frequency by using a synchronous Ethernet technology in a FlexE;
FIG. 9A, FIG. 9B, and FIG. 9C are a schematic architectural diagram of a system for transparently transmitting a service frequency according to an embodiment of this application;
FIG. 10 is a schematic architectural diagram of a system for transparently transmitting a service frequency according to another embodiment of this application;
FIG 11 is a schematic diagram of a method for transparently transmitting a service frequency by an access node according to an embodiment of this application;
FIG 12 is a schematic diagram of a method for transparently transmitting a service frequency by an intermediate node according to an embodiment of this application;
FIG 13 is a schematic diagram of a method for transparently transmitting a service frequency by an egress node according to an embodiment of this application;
FIG 14 is a schematic block diagram of a device for transparently transmitting a service frequency according to an embodiment of this application;
FIG 15 is a schematic block diagram of a device for transparently transmitting a service frequency according to another embodiment of this application;
FIG 16 is a schematic block diagram of a device for transparently transmitting a service frequency according to another embodiment of this application; and
FIG 17 is a schematic block diagram of a device for transparently transmitting a service frequency according to another embodiment of this application.

### DESCRIPTION OF EMBODIMENTS

The following describes the technical solutions in this application with reference to the accompanying drawings.

It should be understood that the technical solutions in the embodiments of this application may be applied to a network such as a FlexE or another network based on an Ethernet technology or a flexible optical transport network (Flexible OTN, FlexO). This is not limited in the embodiments of this application. The following performs description by using the FlexE as an example.

It should be understood that a physical connection link in the embodiments of this application may be briefly referred to as a "link", and a link in the FlexE may also be referred to as a "physical layer (Physical Layer, PHY) link".

The following briefly describes the concepts involved in this specification.

### FlexE technology:

An 802.3 protocol-based Ethernet defined by the Institute of Electrical and Electronics Engineers (Institute of Electrical and Electronics Engineers, IEEE) is widely used and rapidly developed over a considerable period of time in the past. In the Ethernet, an Ethernet port usually appears as a logical data-oriented concept and is referred to as a logical port or is briefly referred to as a port, and an Ethernet physical interface appears as a hardware concept and is referred to as a physical interface or is briefly referred to as an interface. Generally, the Ethernet port is marked by a Media Access Control (Media Access Control, MAC) address. A rate of a conventional Ethernet port is determined based on a rate of an Ethernet physical interface. Generally, maximum bandwidth of an Ethernet port corresponds to bandwidth of an Ethernet physical interface.

In recent years, a rate of an Ethernet interface is increased by 10 times and continuously evolves and develops from 10 Mbps to 100 Mbps, 1000 Mbps (1 Gbps), 10 Gbps, 40 Gbps, 100 Gbps, and 400 Gbps. However, with development of technologies, a difference between requirements of various scenarios for bandwidth granularity is greater. Consequently, a relatively large deviation between an existing Ethernet and an actual application requirement expectation appears. Specifically, an increase of bandwidth required by a mainstream application does not show such as a 10-times increase feature, for example, the bandwidth required by the mainstream application includes 50 Gbps, 75 Gbps, 200 Gbps, and the like. If 50 Gbps is transmitted over a 100GE, resources are wasted. Currently, there is no corresponding Ethernet standard granularity to carry 200 Gbps. Therefore, in the industry, it is expected that support for an Ethernet port (a virtual connection) with a bandwidth of 50 Gbps, 60 Gbps, 75 Gbps, 200 Gbps, 150 Gbps, or the like is provided.

In the industry, it is expected that some Ethernet ports with flexible bandwidth can be provided. These Ethernet ports may share one or more Ethernet physical interfaces. For example, two 40GE ports and two 10GE ports share one 100G physical interface. For another example, the Ethernet port can flexibly adjust a rate as a requirement varies, for example, adjust the rate from 200 Gbps to 330 Gbps or from 50 Gbps to 20 Gbps, to improve usage efficiency of the Ethernet port or prolong a usage life cycle of the Ethernet port. Fixed-rate physical links may be cascaded and bundled to support a stack-based increase of a logical port rate (for example, two 100GE physical interfaces are stacked, cascaded, and bundled to support a 200GE logical port). In addition, bandwidth obtained by flexibly stacking physical interfaces can be used as a resource pool, and bandwidth in the resource pool is allocated to a particular Ethernet logical port based on a granularity (for example, 5G is one granularity), so that several Ethernet virtual connections can efficiently share a physical link group obtained through stacking and cascading.

An OIF proposes a concept of a FlexE in a flexible Ethernet implementation agreement (Flex Ethernet Implementation Agreement) released in April 2016. Specifically, in the FlexE, a flexible Ethernet group (Flex Ethernet Group, FlexE Group) is established by using several Ethernet PHY links, and a universal mechanism that supports different Ethernet MAC rates is provided, to support functions such as binding, a subrate, and channelization of an Ethernet service.

A MAC rate provided by the FlexE may be greater than a rate of a single PHY link (which is implemented through binding), or may be less than a rate of a single PHY link (which is implemented through a subrate and channelization). For example, in a binding scenario of the Ethernet service, a 200G Ethernet service (MAC code stream) can be transmitted by using two existing 100GE physical medium dependent sublayers (Physical Medium Dependent, PMD). In a subrate application scenario of the Ethernet service, a 50G Ethernet service can be transmitted by using one existing 100GE PMD. In addition, in a channelization scenario of the Ethernet service, several logical ports can share one or more physical interfaces, and one 150G Ethernet service and two 25G Ethernet services can be transmitted by using two existing 100GE PMDs.

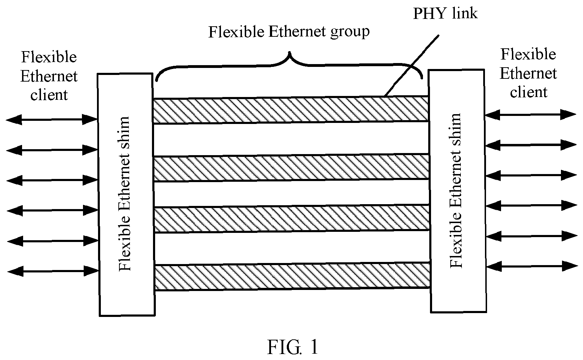

A schematic diagram of a specific architecture of an existing FlexE may be shown in FIG 1. The FlexE is a group bound with K PHY links, and a value of K is a positive integer. A FlexE group shown in FIG. 1 includes four PHY links. In the current flexible Ethernet implementation agreement, only a 100G PHY link is supported. After the IEEE P802.3bs improves a 400GE standard in the future, the FlexE can support a 400G PHY link. A flexible Ethernet client (Flex Ethernet Client, FlexE Client) is a MAC-based Ethernet data stream, and a rate of the flexible Ethernet client may be the same as or different from a rate of an existing Ethernet PHY link, for example, 10 Gb/s, 40 Gb/s, or 25 Gb/s. The client may be referred to as a client, or may be referred to as a client side, or may be referred to as a service. A flexible Ethernet shim (Flex Ethernet Shim, FlexE Shim) is used to map data of the FlexE client to the FlexE group, and demap data of the FlexE group to a logical layer of the FlexE client. Similar to a multi-link gearbox (Multi-Link Gearbox, MLG) technology, the FlexE shim performs a multiplexing function in a sending direction, and maps the data from the FlexE client to the FlexE group. In addition, the FlexE shim performs a de-multiplexing function in a receiving direction, and demaps the data from the FlexE group to the FlexE client.

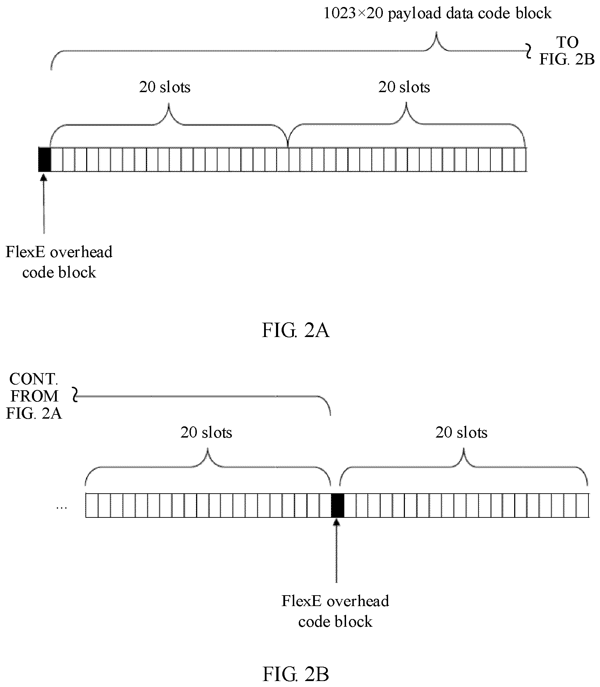

In the FlexE, with reference to a synchronous digital hierarchy (Synchronous Digital Hierarchy, SDH)/optical transport network (Optical Transport Network, OTN) technology, a fixed frame format is constructed for physical interface transmission, and slot division is performed for time division multiplexing (Time Division Multiplexing, TDM). FIG 2A and FIG 2B are a schematic diagram of a code block on a PHY link according to an embodiment of this application. Different from that in an SDH/OTN, a slot division granularity for TDM in the FlexE is 66 bits, and may exactly correspondingly carry a 64B/66B code block. Data on each PHY link in the FlexE is aligned by periodically inserting a FlexE overhead (Overhead, OH) code block. Specifically, one 66B FlexE overhead code block is inserted every 1023x20 66B data code blocks, as shown in FIG 2A and FIG 2B. Corresponding to a scenario of a 100G PHY link, a time interval between adjacent FlexE overhead code blocks is 13.1 microseconds.

In a FlexE 1.0 standard, it is stipulated that 64/66B encoding is performed on a FlexE client to obtain a code block stream (block stream), rate matching is performed through idle code block insertion/deletion (Idle Insert/Delete) to obtain a code block stream of a flexible Ethernet service, and code blocks in the code block stream of the flexible Ethernet service are placed, one by one, in slots allocated to the flexible Ethernet service. An idle code block may also be referred to as a stuff (stuff) code block.

A FlexE frame is classified into a basic frame and a multiframe. One FlexE basic frame includes eight lines, a FlexE overhead code block is located at a first 66B block location of each line, and the overhead code block is followed by a payload area (1023x20 66B payload data code blocks) for slot division. A 100GE is used as an example. Bandwidth of a 100GE interface is divided into 20 slots, and bandwidth of each slot is approximately 5 Gbps. 32 basic frames constitute one multiframe.

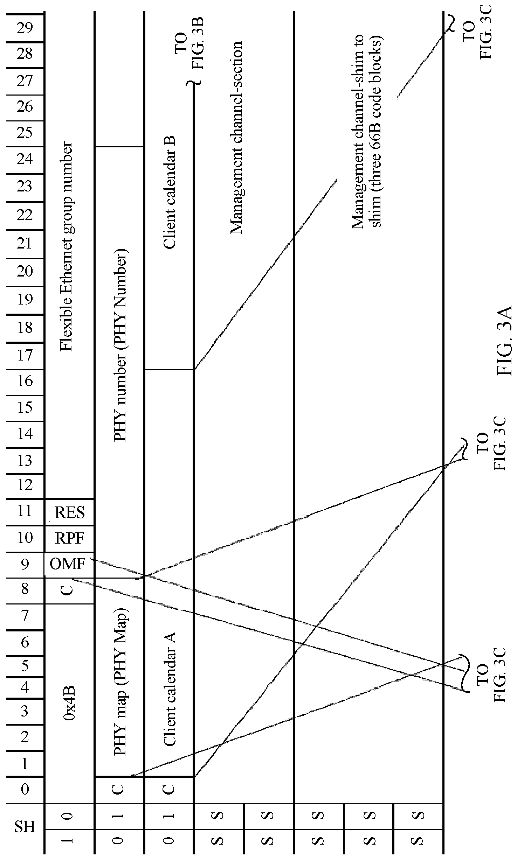

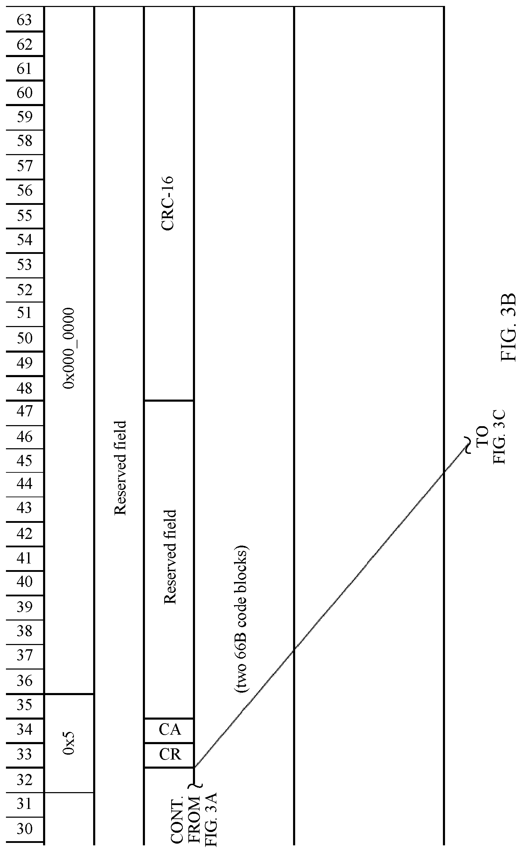

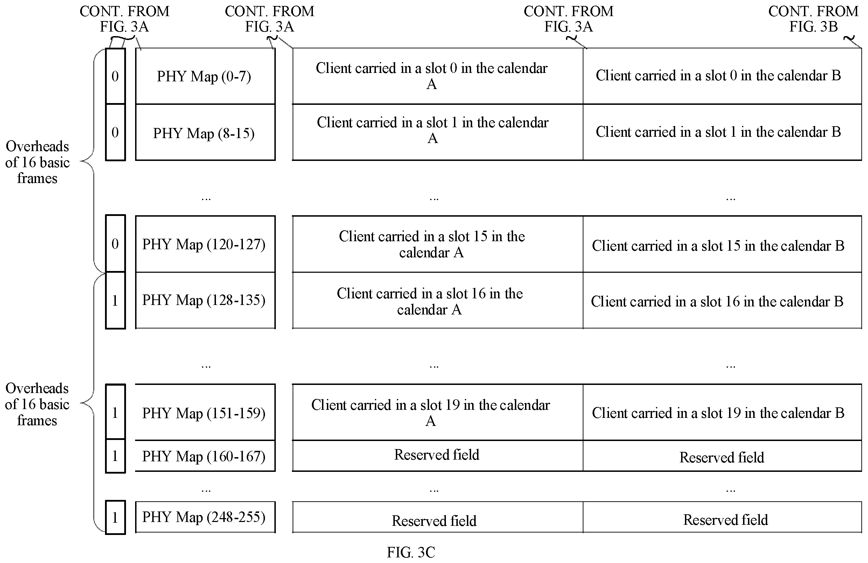

FIG 3A, FIG 3B, and FIG 3C are a schematic diagram of an overhead code block in a FlexE basic frame according to an embodiment of this application. A first code block in a FlexE basic frame uses a "0x4B" or "0x5" field as a tag field, to identify the code block as an overhead code block. After recognizing the overhead code block and receiving 1023x20 64/66B code blocks (data code blocks), a receive end device may receive a next overhead code block, and by analogy, the entire FlexE basic frame may be extracted from a code block stream. It can be learned from FIG 3A, FIG 3B, and FIG 3C that the overhead code block includes some fields used for specific indication. For example, a FlexE overhead code block transmitted on each link includes fields such as a flexible Ethernet group number (FlexE Group Number), a physical link map (PHY Map), a physical link number (PHY Number), a calendar (Calendar) A, and a calendar B. The FlexE group number is used to indicate a number of a flexible Ethernet group in which the link is located. The PHY map (8 x 32 = 256 bits are needed in total to indicate the PHY map in one FlexE multiframe) is used to indicate distribution of PHYs included in the flexible Ethernet group in which the link is located, to be specific, the PHY map (PHY Map) is used to control which PHY links are members of the group (control of which PHYs are members of this group). The physical link number may be from 1 to 254. The calendar A and the calendar B are respectively used to indicate a current calendar configuration and a standby calendar configuration of the FlexE group. In a third code block of each FlexE basic frame, 16 bits are used to indicate a number of service data transmitted in a slot. A first FlexE frame in each FlexE multiframe carries a number of service data transmitted in a corresponding slot 0 (slot 0). By analogy, a twentieth FlexE basic frame in the FlexE multiframe carries a number of service data transmitted in a corresponding slot 19. After receiving information about FlexE basic frames on all links in the FlexE group, the receive end device may obtain a slot allocation manner of service data in the FlexE group.

In addition, a field C is used to indicate a calendar in use (calendar configuration in use). An OMF is an overhead multiframe indicator (Overhead Multiframe Indicator). An RPF is a remote PHY fault (Remote PHY Fault). Res and Reserved are reserved fields. The PHY number (PHY Number) is an identifier of the PHY in the FlexE group (Identity of this PHY within the group). A CR is a calendar switch request (Calendar Switch Request). A CA is a calendar switch acknowledgement (Calendar Switch Acknowledge), and ss is valid synchronization header bits (Valid sync header bits), including 2 bits, where the 2 bits may be 01 or 10. A CRC is a cyclic redundancy check (Cyclic Redundancy Check) bit. It can be learned from FIG 3A, FIG 3B, and FIG 3C that there are still some reserved fields in a current overhead code block. In addition, five 66B code blocks are used as management channels, to transmit information other than data payload between two FlexE devices.

### Service frequency and service clock:

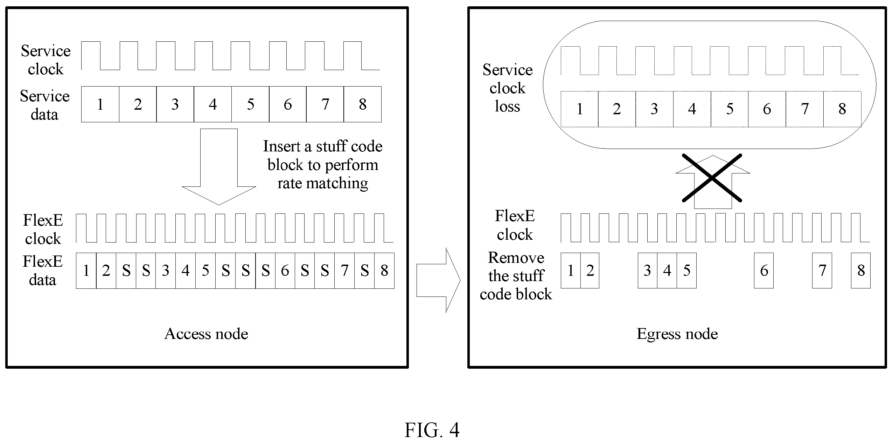

FIG 4 is a schematic diagram of a service clock loss in a process of transmitting service data in a FlexE. A service requiring that a service frequency is transparently transmitted is usually a CBR service, for example, a CPRI service, and an SDH service. As shown in FIG 4, in a process of transmitting service data of the CBR service (a code block 1 to a code block 8 of the service data shown in FIG 4) in respective networks, to ensure a constant bit rate, the service data of the CBR service is usually transmitted together with a service clock. A time between a rising edge and a next rising edge of the service clock is referred to as a clock cycle, and a quantity of clock cycles per second is referred to as a clock frequency.

At an access node, the service data of the CBR service is mapped, to several slots of the FlexE for transmission, from an original network in which the CBR service is transmitted. Generally, bandwidth of slots allocated by the FlexE to the CBR service is greater than bandwidth of the CBR service. Therefore, mapping the service data to the FlexE is asynchronous mapping. In a currently used method, a stuff (stuff) code block (a code block S shown in FIG 4) is inserted into a code block stream of the service data, to form a code block stream of FlexE data, so as to implement rate matching between service bandwidth and transmission slot bandwidth of the FlexE. The code block stream of the FlexE data is transmitted together with a FlexE clock in the FlexE. When the code block stream of the FlexE data is transmitted to an egress node, the egress node removes the stuff code block in the code block stream of the FlexE data. However, the service clock of the service data is lost. Because the service clock and the FlexE clock have different sources, the service clock cannot be recovered. In other words, the FlexE does not support transparent transmission of a service frequency. For the service requiring that a service frequency is transparently transmitted, a service clock loss or a service frequency loss is unacceptable.

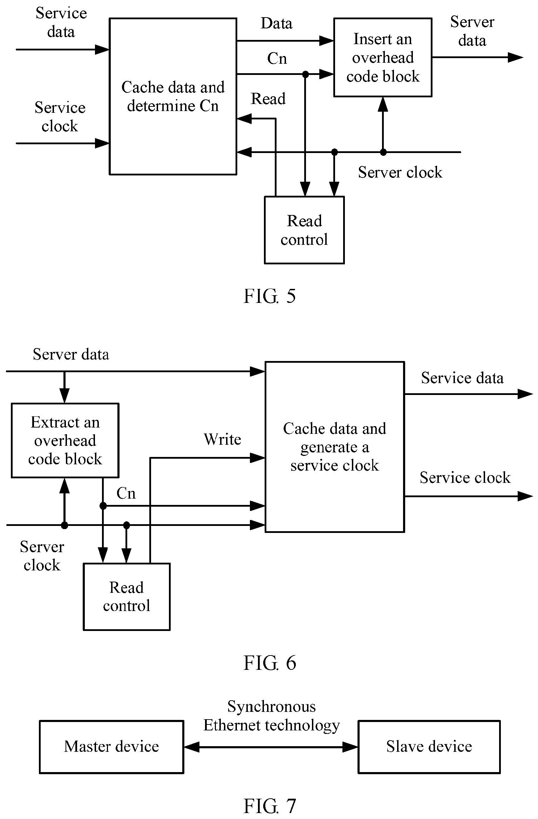

Technology for transparently transmitting a service frequency in an optical transport network (Optical Transmission Network, OTN):
In the OTN, a service frequency is transparently transmitted in a manner in which a quantity of n-bit services carried in a single server frame or a server multiframe is transmitted by using OTN overheads (number of client n-bit data entities per server frame or server multiframe, Cn). FIG 5 is a schematic diagram of a circuit that is used to map service data in an OTN. In other words, FIG 5 is a schematic diagram of a processing circuit of an access node of a CBR service. The access node receives service data (client data) and a service clock (client clock), and caches the service data and determines Cn (buffer and determine Cn). Specifically, a read control (read control) reads a server clock (server clock) and the service clock (client clock), and determines the Cn based on the server clock and the service clock. The access node of the CBR service calculates the Cn based on the service clock (corresponding to a service frequency, namely, a receiving frequency of the access node) and the server clock (corresponding to a server frequency, namely, a sending frequency of the access node), and inserts the Cn into an overhead (overhead) code block of a link, to form server data (server data) for transmission.

FIG 6 is a schematic diagram of a circuit that is used to demap service data in an OTN. In other words, FIG 6 is a schematic diagram of a processing circuit of an egress node of a CBR service. The egress node receives server data (server data) and a server clock (server clock), caches the server data, and generates a service clock (client clock). Specifically, a read control (read control) reads the server clock (server clock) and Cn, and generates the service clock (client clock) based on the server clock and the Cn. The egress node of the CBR service recovers the service clock (corresponding to a service frequency, namely, a sending frequency of the egress node) based on the server clock (corresponding to a server frequency, namely, a receiving frequency of the egress node) and the Cn.

For a FlexE, similarly, Cn is calculated and the Cn is inserted into an overhead code block of a PHY link for transmission, a FlexE standard needs to be changed, and use of fields in the overhead code block of the FlexE is replanned. In addition, when the Cn is transmitted in the overhead code block, the Cn needs to be calculated by using a basic frame period or a multiframe period of the PHY link as a statistical period. Consequently, the statistical period of the Cn is closely related to the basic frame period or the multiframe period of the PHY link. However, the FlexE carries various types of services. For different service rates, if the Cn is calculated by using a same statistical period, accuracy of the Cn is relatively poor. For example, for a service with a relatively low rate, if the statistical period is relatively short, a large error is caused. In addition, the FlexE is based on an Ethernet kernel, and a basic frame structure or a multiframe structure defined in the FlexE is periodic. In a physical coding sublayer (physical coding sublayer, PCS), insertion of an alignment marker (Alignment Marker, AM) causes a periodic jitter of the overhead code block of the FlexE. The periodic jitter of the overhead code block directly affects accuracy of Cn calculation, and quality of the service clock that is recovered by the egress node of the CBR service based on the Cn becomes poor.

The schematic diagram shown in FIG 4 is for a single-hop networking mode. To be specific, two devices: an access node and an egress node are directly physically connected by using a communications cable, and there is no other device between the two devices, in other words, there is no intermediate node between the two devices. In the technology for transparently transmitting a service frequency in the OTN shown in FIG 5 and FIG 6, only a single-hop networking mode is considered, and a problem of transparently transmitting a frequency in a multi-hop cascading networking mode cannot be resolved. In the multi-hop cascading networking mode, there is another intermediate node between an access node and an egress node. In the FlexE, both the single-hop networking mode and the multi-hop cascading networking modes exist. For the multi-hop cascading networking mode, in a process of transmitting FlexE data, although each level of device has a same nominal frequency, a specific difference exists in actual frequencies. If the technology in FIG 5 and FIG 6 is still used, because the Cn is calculated based on the frequencies of the access node, if the Cn is directly transparently transmitted, quality of the recovered service clock is poor.

Technology for transparently transmitting a service frequency in a FlexE:
FIG 7 is a schematic diagram of a synchronous Ethernet technology in a FlexE. In the FlexE, two adjacent devices are connected by using a single-hop physical interface and a PHY link, a master (master) and slave (slave) relationship between the two devices may be determined by using the synchronous Ethernet technology, and synchronization between slave device frequency and master device frequency is implemented.

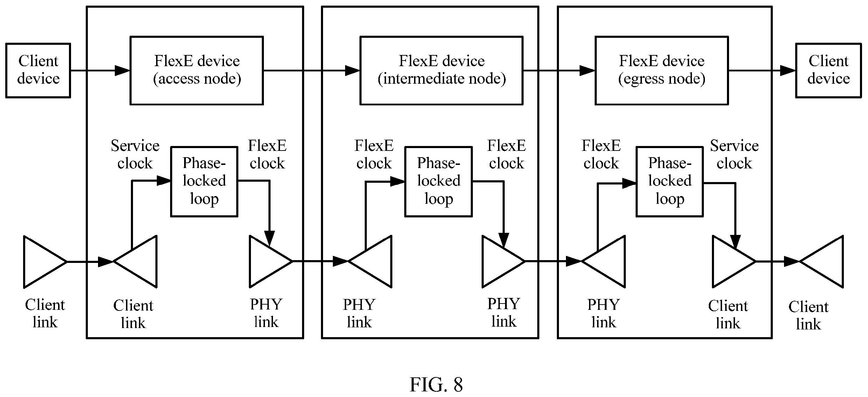

FIG 8 is a schematic diagram of transparently transmitting a service frequency by using a synchronous Ethernet technology in a FlexE. Service data that is used as a client signal of a FlexE is transmitted from a client device to a FlexE device by using a client link. A FlexE device that serves as an access node of a service uses a service clock as a reference source, generates a FlexE clock by using a phase-locked loop, and uses the FlexE clock as a clock of a PHY link in the FlexE. Frequency synchronization is performed hop by hop, on a transmission link in the FlexE by using the synchronous Ethernet technology, on one or more FlexE devices that serve as an intermediate node. A FlexE device that serves as an egress node of the service uses the FlexE clock as a reference source, and generates the service clock, to implement transparent transmission of the service clock.

However, when the service frequency is transparently transmitted by using the synchronous Ethernet technology, a service clock of only one service in the FlexE can be used as a reference, and a requirement of only one service for transparently transmitting a service frequency can be resolved. As a bearer network, the FlexE carries various types of services, for example, a CPRI service, and an SDH service. When a plurality of services have the requirement for transparently transmitting a service frequency, and service clocks of the services have different sources, the synchronous Ethernet technology cannot implement transparent transmission of service frequencies of the plurality of services.

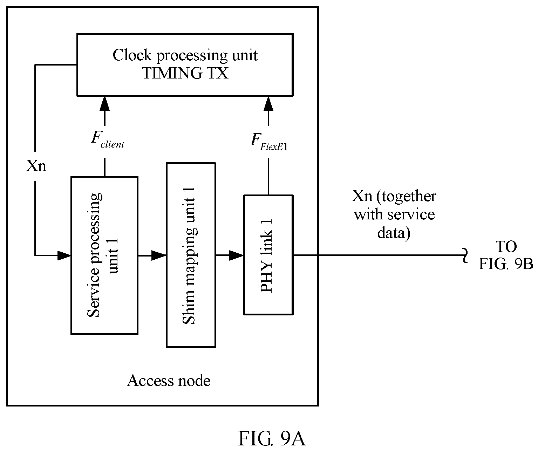

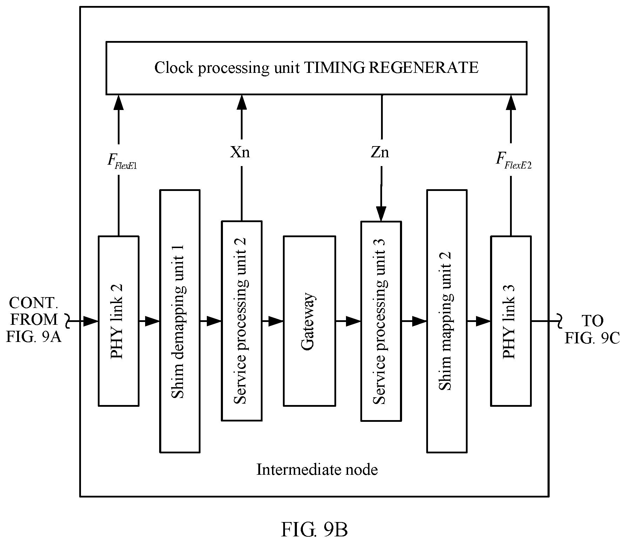

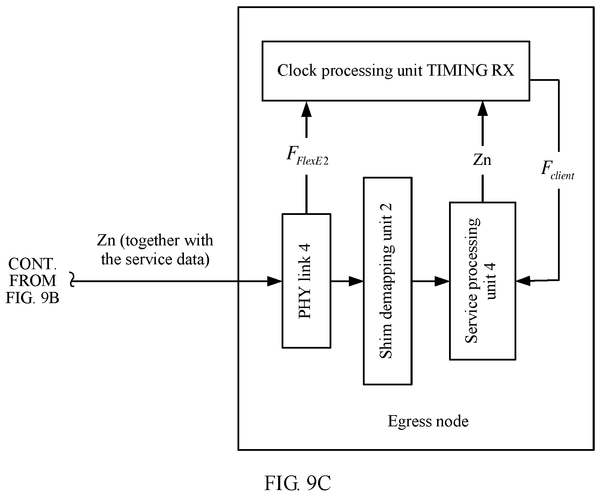

To resolve the foregoing problem, an embodiment of this application provides a method for transparently transmitting a service frequency. FIG 9A, FIG 9B, and FIG 9C are a schematic architectural diagram of a system for transparently transmitting a service frequency according to an embodiment of this application. FIG 9A, FIG 9B, and FIG 9C show an architecture of a multi-hop cascading networking mode of a FlexE. The figure is described by using an example in which one intermediate node exists. However, the multi-hop cascading networking mode in this embodiment of this application is not limited thereto.

In the FlexE, a communication link may be unidirectional or bidirectional.

FIG 9A, FIG 9B, and FIG 9C are described by using a unidirectional communication link in a multi-hop cascading networking mode as an example. A system of the multi-hop cascading networking mode of the unidirectional communication link includes an access node, an intermediate node, and an egress node. After service data enters the access node by using a client link, the service data is mapped to a PHY link in the FlexE, and is transmitted to a lower-level device. The lower-level device may be the intermediate node. The access node may be connected to one or more intermediate nodes in a cascade manner. Data is transmitted between an intermediate node and another intermediate node and between an intermediate node and the egress node by using the PHY link. The egress node demaps the service data from the PHY link, and performs subsequent transmission by using a client link again.

The access node includes a clock processing unit TIMING TX, a service processing (CLIENT) unit 1, a shim mapping (SHIM_MUX) unit 1, and a PHY link 1. The service processing unit 1 works in a mapping direction. For first service data, the service processing unit 1 is configured to: complete rate matching of the service data, and insert first service frequency information Xn. The clock processing unit TIMING TX receives a service frequency *F_{client}* from the service processing unit 1, receives a sending frequency *F*_{*FlexE*1} of the FlexE from the PHY link 1, and generates the first service frequency information Xn. The shim mapping unit 1 may be a SHIM_MUX unit defined in a FlexE standard, and is configured to map the service data to the PHY link 1. The PHY link 1 is an interface defined in the FlexE standard.

In this embodiment of this application, the access node records service frequency information (for example, the first service frequency information Xn corresponding to the first service data and second service frequency information Wm corresponding to second service data) of each service, and transmits the service frequency information of each service to the lower-level device. At the access node, a relationship between a service frequency of each service and the sending frequency *F*_{*FlexE*1} of the FlexE of the access node is calculated by using a sending frequency (namely, a frequency of the FlexE) of the access node as a reference, to obtain the service frequency information. The service frequency information may be transmitted to the lower-level device by using an overhead code block of the Flex. In this case, one or more fields in the overhead code block of the Flex need to be defined to carry service frequency information of one or more services. The service frequency information of each service may also be transmitted together with respective data in a channel. To be specific, the service frequency information of each service is encapsulated into a code block, and the code block is inserted into a data stream of the service data for transmission. Optionally, the service frequency information may be encapsulated into a code block identified by O code. Alternatively, a code block in which the service frequency information is encapsulated may be marked by another special identifier.

It should be understood that, in the embodiments of this application, the code block in which the service frequency information is encapsulated may be an S/T bit code block, a 64/66B code block, an 8/10B code block, or the like.

It should be further understood that the O code is O code, and a type field (type field) of the O code may be 0x4B. Currently, 0x0 and 0xF are used for O code that has been standardized in 802.3. Currently, O code of a FlexE overhead block 1 defined in OIF FlexE IA 1.0 is 0x5.

The intermediate node includes a clock processing unit TIMING REGENERATE, a PHY link 2, a shim demapping (SHIM_DEMUX) unit 1, a service processing unit 2, a gateway (SWITCH), a service processing (CLIENT) unit 3, a shim mapping unit 2, and a PHY link 3. The shim demapping unit 1 may be a SHIM_DEMUX unit defined in the FlexE standard, and is configured to demap the service data from the PHY link 2. The service processing unit 2 works in a demapping direction, and is configured to complete parsing of the service data and parsing of the service frequency information. The gateway is a switching component of the FlexE. The service processing unit 3 works in a mapping direction. For the first service data, the service processing unit 3 is configured to: complete rate matching of the service data, and insert first service frequency information Zn. The processing unit TIMING REGENERATE receives a receiving frequency *F*_{*FlexE*1} of the FlexE from the PHY link 2, receives the first service frequency information Xn from the service processing unit 2, receives a sending frequency *F*_{*FlexE*2} of the FlexE from the PHY link 3, and generates the new first service frequency information Zn based on the foregoing information. The shim mapping unit 2 may be a SHIM_MUX unit defined in the FlexE standard, and is configured to map the first service data to the PHY link 3. The PHY link 2 and the PHY link 3 are interfaces defined in the FlexE standard.

For the multi-hop cascading networking mode, in a process of transmitting FlexE data, although each level of device has a same nominal frequency, a specific difference exists in actual frequencies. If each FlexE device uses a nominal FlexE frequency as a reference, a statistics result of service frequency information is inaccurate. Consequently, service frequency recovery performance is poor. In this embodiment of this application, the service frequency information may be recalculated at each intermediate node based on actual FlexE frequencies (including a sending frequency and a receiving frequency) of the intermediate node.

The intermediate node of the service transmission link does not need to parse all service data, or even recover the service frequency. The service frequency information may be recalculated based on a receiving frequency of the intermediate node, the service frequency information, and a sending frequency of the intermediate node. The intermediate node may encapsulate the recalculated service frequency information into a code block, insert the code block into the data stream of the service data, and transmit the data stream of the service data to a lower-level device.

The egress node includes a clock processing unit TIMING RX, a PHY link 4, a shim demapping unit 2, and a service processing unit 4. The PHY link 4 is an interface defined in the FlexE standard. The shim demapping unit 2 may be a SHIM_DEMUX unit defined in the FlexE standard, and is configured to demap the service data from the PHY link 4. The service processing unit 4 works in a demapping direction, and is configured to complete parsing of the service data and parsing of the service frequency information. For the first service data, the processing unit TIMING RX receives the first service frequency information Zn from the service processing unit 4, receives a receiving frequency *F*_{*FlexE*2} of the FlexE from the PHY link 4, and recovers the service frequency *F_{client}* of the first service data based on the foregoing information.

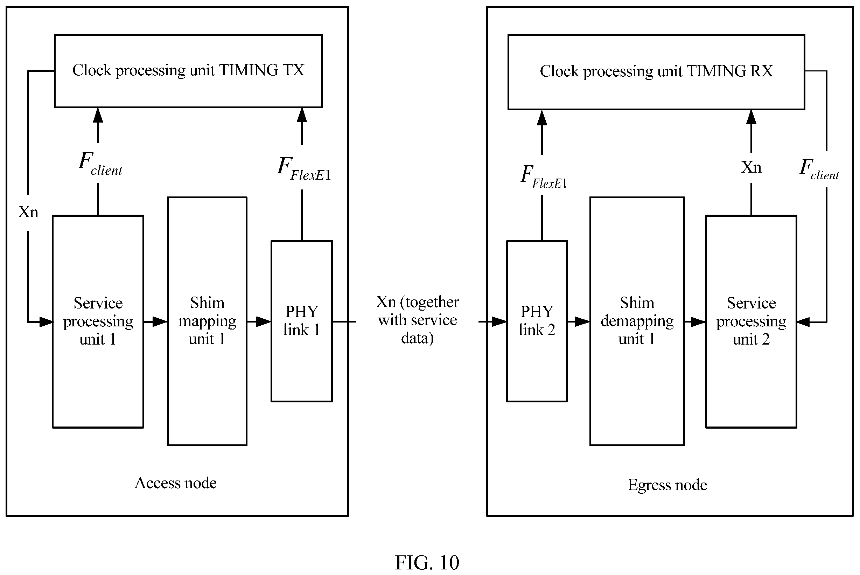

FIG 10 is a schematic architectural diagram of a system for transparently transmitting a service frequency according to another embodiment of this application. FIG 10 is described by using a unidirectional communication link in a single-hop networking mode as an example. A system of the single-hop networking mode of the unidirectional communication link includes an access node and an egress node. After service data enters the access node by using a client link, the service data is mapped to a PHY link in a FlexE, and is transmitted to a lower-level device, namely, the egress node. The egress node demaps the service data from the PHY link, and performs subsequent transmission by using a client link again.

The access node includes a clock processing unit TIMING TX, a service processing (CLIENT) unit 1, a shim mapping (SHIM_MUX) unit 1, and a PHY link 1. The service processing unit 1 works in a mapping direction, and is configured to: complete rate matching of the service data, and insert service frequency information Xn. For first service data, the processing unit TIMING TX receives a service frequency *F_{client}* of the first service data from the service processing unit 1, receives a sending frequency *F*_{*FlexE*1} of the FlexE from the PHY link 1, and generates the first service frequency information Xn. The shim mapping unit 1 may be a SHIM_MUX unit defined in a FlexE standard, and is configured to map the first service data to the PHY link 1. The PHY link 1 is an interface defined in the FlexE standard.

The egress node includes a clock processing unit TIMING RX, a PHY link 2, a shim demapping unit 1, and a service processing unit 2. The PHY link 2 is an interface defined in the FlexE standard. The shim demapping unit 1 may be a SHIM_DEMUX unit defined in the FlexE standard, and is configured to demap a data stream of the first service data from the PHY link 2. The service processing unit 2 works in a demapping direction, and is configured to complete parsing of the service data and parsing of the service frequency information. For the first service data, the processing unit TIMING RX receives the first service frequency information Xn from the service processing unit 2, receives a receiving frequency *F*_{*FlexE*1} of the FlexE from the PHY link 2, and recovers the service frequency *F_{client}* of the first service data based on the foregoing information.

A function of each node in the single-hop networking mode is similar to a function of a corresponding node in a multi-hop cascading networking mode. Details are not described herein again.

The following describes in detail the method for transparently transmitting a service frequency according to the embodiments of this application from a perspective of each node.

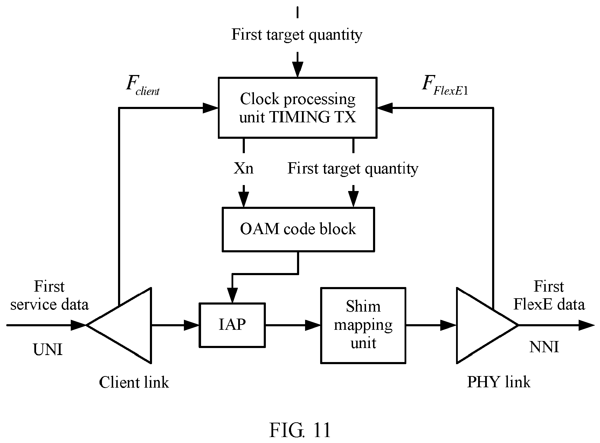

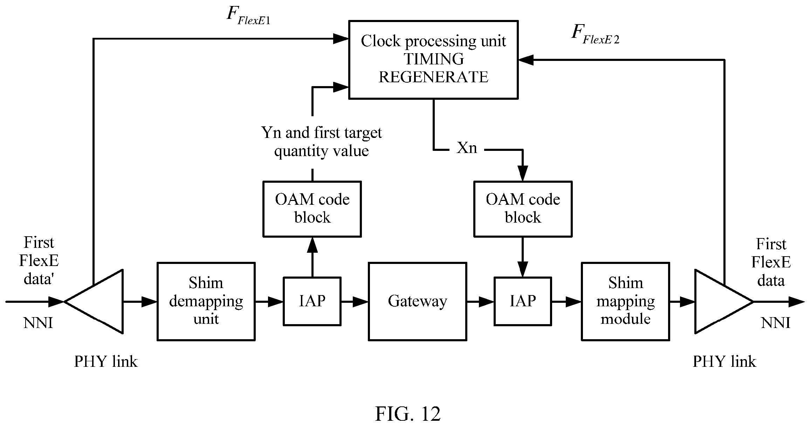

An access node or an intermediate node is considered as a first device, a lower-level device is a second device, and the second device may be an intermediate node or an egress node. FIG 11 is a schematic diagram of a method for transparently transmitting a service frequency by an access node according to an embodiment of this application. FIG 12 is a schematic diagram of a method for transparently transmitting a service frequency by an intermediate node according to an embodiment of this application. With reference to FIG 11 and FIG 12, the method for transparently transmitting a service frequency may include the following steps.

Step 1. A first device determines first service frequency information Xn, where the first service frequency information Xn is used to indicate an amount of n-bit first service data that is sent by the first device within first statistical duration, a sending frequency of the first device is used as a reference for the first statistical duration, and n is a positive integer.

It should be understood that the first service data herein is data of a to-be-discussed target service. In a FlexE, there may be more pieces of service data, for example, second service data, and third service data. This is not limited in this embodiment of this application.

It should be further understood that the first statistical duration may be determined based on a rate of the first service data. If the rate of the first service data is lower than a specific threshold, relatively long first statistical duration may be determined, for example, the first statistical duration is longer than a length of a basic frame or a multiframe. If the rate of the first service data is higher than a specific threshold, relatively short first statistical duration may be determined, for example, the first statistical duration is shorter than a length of a basic frame or a multiframe.

The first statistical duration may be a first target quantity of transmit clock cycles. That a first device determines first service frequency information Xn may include: The first device calculates the first service frequency information Xn by using the first target quantity (for example, ticks) of transmit clock cycles as a statistics window. It should be understood that statistics about Cn is collected by using a frame as a period in an OTN. As a bearer network, the FlexE may carry various types of services, and rates of different types of services greatly vary. For a service with a relatively low rate, if a statistical period is relatively short, an error is relatively large. For a service with a relatively high rate, a statistical period does not need to be very long. Therefore, in this embodiment of this application, the first service frequency information Xn is calculated by using ticks of transmit clock cycles as a reference. The ticks may be customized by a network administrator based on a service frequency (which may be predefined or defined based on real-time service transmission), or may be defined by a corresponding control device in the FlexE based on a service frequency, to adapt to services of different rates. In other words, the network administrator or the control device in the FlexE may determine proper statistical duration (a length of the statistics window) based on a service rate, for example, the ticks of transmit clock cycles of the FlexE are used as the statistical duration. In this embodiment of this application, when the service frequency information is calculated, statistical duration is periodically decoupled from the basic frame and the multiframe, and optimal statistical duration may be accordingly selected based on the service rate, so that the service frequency information obtained through statistics collection is more accurate. In addition, overheads of the FlexE are affected by insertion of an AM, and consequently, an overhead period is unstable. The customized statistical duration in this embodiment of this application is not affected by other overheads, and a period is stable with no jitters. The stable statistical duration also enables the service frequency information obtained through statistics collection to be smoother, a clock that is recovered by an egress node based on the service frequency information is smoother, and a jitter is smaller.

Optionally, the first device may encapsulate, into a first S/T bit code block, the first service frequency information Xn and first statistical duration information that is used to indicate the first statistical duration, and send the first S/T bit code block to a second device. The first statistical duration information may be absolute duration of the first statistical duration, or may be information about the first target quantity (ticks), to reduce a quantity of bits. Optionally, the first statistical duration information and the first service frequency information may also be separately encapsulated and separately sent to the second device. The first S/T bit code block may also be referred to as an operation, administration and maintenance (Operation, Administration, Maintenance, OAM) code block.

The ticks may be a system preset value. In this case, there is no need to transmit information used to indicate the target quantity (ticks). Alternatively, the ticks may be uniformly notified to all devices in a system by a control element of the system. Certainly, the first device may also calculate the first service frequency information Xn by using the basic frame or the multiframe as the first statistical duration. This is not limited in this embodiment of this application.

Specifically, when the first device is an access node, the method may further include: The first device determines the first statistical duration based on the rate of the first service data. That a first device determines first service frequency information Xn includes: The first device collects statistics about the amount of n-bit first service data that is sent within the first statistical duration. The amount is Xn.

The first device may determine the first statistical duration based on the rate of the first service data. For example, if the rate of the first service data is relatively low, relatively long first statistical duration may be determined, for example, first statistical duration longer than the length of the basic frame or the multiframe. If the rate of the first service data is relatively high, relatively short first statistical duration may be determined, for example, first statistical duration shorter than the length of the basic frame or the multiframe.

The first service data requiring that a service frequency is transparently transmitted enters the access node with a bit width of an integer multiple of n bits by using a user network interface (User Network Interface, UNI). The UNI is also referred to as a user side interface, to be specific, an interface between a network and a user, and the UNI is a client link interface. A service frequency of a first service is *F_{client},* and the service frequency of the first service data is also a receiving frequency of the access node. A clock frequency of the FlexE is *F*_{*FlexE*1}*,* and the clock frequency of the FlexE is also the sending frequency of the access node. The access node calculates the first service frequency information Xn of the first service. Specifically, the access node may collect statistics about the amount of n-bit first service data that is sent within the first statistical duration, for example, an amount of n-bit first service data that is sent by the first device within ticks of transmit clock cycles, to obtain the Xn. Alternatively, the first device may calculate the Xn in another manner.

Optionally, the first service frequency information Xn may be shown in the following formula (1). $Xn = \left({F}_{client}/n\right) \times \left(ticks/{F}_{FlexE 1}\right)$ (1)

It should be understood that another parameter or coefficient may also be introduced to the first service frequency information Xn. Alternatively, when n is a parameter preset by the system or known by all devices in a FlexE network, the first service frequency information Xn may not include n. Therefore, the first service frequency information Xn may be shown in the following formula (2).

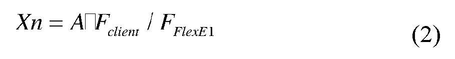

A is a frequency coefficient, *F_{client}* is an original service frequency of the first service data, and *F*_{*FlexE*1} is the sending frequency of the access node.

It should be understood that, when another parameter or coefficient is introduced to the first service frequency information Xn, a value of the first service frequency information Xn may be equal to the amount of n-bit first service data that is sent within the first statistical duration, or may not be equal to the amount, but only correspond to the amount, or a lower-level device may calculate a value of the amount based on related information. This is not limited in this embodiment of this application.

When the first device is an intermediate node, the first device further receives a data stream of the first service data, where the data stream of the first service data is sent by a third device, and parses out first service frequency information Yn from a second S/T bit code block of the data stream of the first service data. That a first device determines first service frequency information Xn includes: The first device collects, based on the first service frequency information Yn, statistics about the amount of n-bit first service data that is sent within the first statistical duration, to obtain the first service frequency information Xn.

Optionally, the first statistical duration information is further encapsulated in the second S/T bit code block, and the first statistical duration information is used to indicate the first statistical duration. The first statistical duration information may be the first target quantity.

The intermediate node receives, by using an NNI, first FlexE data sent by an upper-level node, and the first FlexE data includes a value of the ticks that is used to indicate the information about the first target quantity and the first service frequency information Yn. The intermediate node demaps the first FlexE data by using a shim demapping unit, and reads the Yn and the value of the ticks from the first FlexE data. Specifically, for example, the OAM code block may be found by using an O code identifier of a code block, and then the Yn and the value of the ticks are read. A clock processing unit TIMING REGENERATE evenly disperses the Yn into the received first FlexE data based on a receiving frequency *F*_{*FlexE*1}*,* uses ticks of FlexE transmit clock cycles (corresponding to a sending frequency *F*_{*FlexE*2}) *of* the intermediate node as a statistics window, and recollects statistics about dispersed first service frequency information, to obtain the Xn. It should be understood that, if the intermediate node recovers the service data, cache needs to be added to absorb a data gap obtained after a stuff code block is removed, and recovering the service data needs a clock recovery circuit. As a result, costs are higher. In this embodiment of this application, the intermediate node does not need to parse and recover the service data, but directly reads the service frequency information Yn and the value of the ticks of the upper-level node, and no cache needs to be additionally added, so that a service delay is smaller.

Step 2. The first device encapsulates the first service frequency information Xn into a first S/T bit code block, inserts the first S/T bit code block into a data stream of the first service data, and sends the data stream of the first service data to a second device, where S and T are positive integers.

Optionally, the first S/T bit code block is an S/T bit code block identified by O code.

In a specific example, the access node encapsulates the calculated first service frequency information Xn and the value of the ticks into the S/T bit code block identified by the O code, to be specific, the OAM code block. An idle adjustment unit (Idle Adjust Processor, IAP), also referred to as an idle addition/deletion unit, places the OAM code block in a location in which a common stuff code block is originally to be placed, or the OAM code block is used as a type of stuff code block, and is filled between data code blocks used to carry the first service data. Alternatively, the IAP uses the stuff code block to fill a gap between the data code blocks carrying the first service data, and then the stuff code block is replaced with the OAM code block. The IAP maps these code blocks to a PHY link by using a shim mapping unit. In other words, the Xn, the value of the ticks, and a service code block in the FlexE data constitute a data stream of the first FlexE data, and the data stream of the first FlexE data is transmitted to the lower-level device by using a network to network interface (Network to Network Interface, NNI).

Optionally, a second service may be further transmitted in a link in the FlexE. Optionally, the method for transparently transmitting a service frequency may further include: The first device determines second service frequency information Wm, where the second service frequency information Wm is used to indicate an amount of m-bit second service data that is sent by the first device within second statistical duration, the sending frequency of the first device is used as a reference for the second statistical duration, and m is a positive integer; and the first device encapsulates the second service frequency information Wm into a third S/T bit code block, inserts the third S/T bit code block into a data stream of the second service data, and sends the data stream of the second service data to the second device. It should be understood that the method for transparently transmitting a service frequency in this embodiment of this application can support a plurality of pieces of service data with a requirement for transparently transmitting a service frequency in simultaneously accessing the link in the FlexE without changing an existing FlexE standard. Because a stuff code block is inserted into a data stream of each service with the requirement for transparently transmitting a service frequency to perform rate matching in the FlexE, inserting service frequency information into a data stream of respective service data and properly using bandwidth allocated to the service according to the method in this embodiment of this application does not affect another service, and scalability is strong.

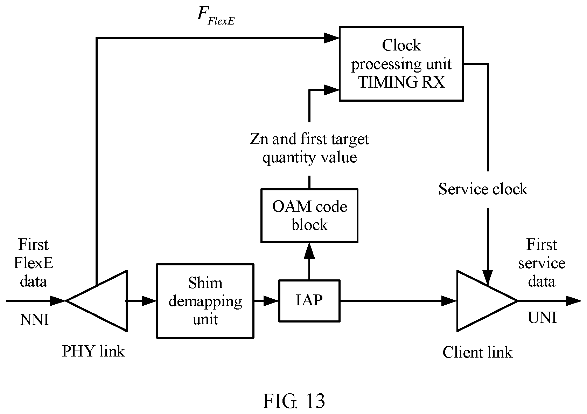

The following describes the method for transparently transmitting a service frequency from a perspective of an egress node. The egress node is a fourth device, and an upper-level node of the egress node is a fifth device. FIG 13 is a schematic diagram of a method for transparently transmitting a service frequency by an egress node according to an embodiment of this application. With reference to FIG 13, the method for transparently transmitting a service frequency may include the following steps.

Step 1. A fourth device receives a data stream of first service data, where the data stream of the first service data is sent by a fifth device, the data stream of the first service data includes a first S/T bit code block, the first S/T bit code block includes first service frequency information Zn, the first service frequency information Zn is used to indicate an amount of n-bit first service data that is sent by the fifth device within first statistical duration, a sending frequency of the fifth device is used as a reference for the first statistical duration, and n, S, and T are positive integers.

Optionally, the first S/T bit code block is an S/T bit code block identified by O code.

Optionally, the first service frequency information *Zn* = *A*□*F_{client}* / *F_{FlexE} ,* A is a frequency coefficient, *F_{client}* is an original service frequency of the first service data, and *F_{FlexE}* is the sending frequency of the fifth device.

Step 2. The fourth device recovers, based on the first service frequency information Zn, a clock corresponding to the first service data.

Optionally, the method for transparently transmitting a service frequency may further include: First statistical duration information is further encapsulated in the first S/T bit code block, and the first statistical duration information is used to indicate the first statistical duration; and that the fourth device recovers, based on the first service frequency information Zn, a clock corresponding to the first service data in step 2 may include: The fourth device recovers, based on the first service frequency information Zn and the first statistical duration information, the clock corresponding to the first service data.

Specifically, an egress node receives, by using an NNI, first FlexE data sent by an upper-level node. The first FlexE data includes the first service frequency information Zn and a value of ticks. The egress node demaps the first FlexE data by using a shim demapping unit, and reads the Zn and the value of the ticks from the first FlexE data. A processing unit TIMING RX recovers the service frequency *F_{client}* of a first service based on a receiving frequency *F_{FLexE},* the Zn, and the value of the ticks, to be specific, recovers the service clock of the first service, where the service clock is used as a transmit clock of a client link.

Optionally, a second service may be further transmitted in a link in a FlexE. Optionally, the method for transparently transmitting a service frequency may further include: The fourth device receives a data stream of second service data, where the data stream of the second service data is sent by the fifth device, the data stream of the second service data includes a second S/T bit code block, the second S/T bit code block includes second service frequency information Vm, the second service frequency information Vm is used to indicate an amount of n-bit second service data that is sent by the fifth device within second statistical duration, the sending frequency of the fifth device is used as a reference for the second statistical duration, and m is a positive integer; and the fourth device recovers, based on the second service frequency information Vm, a clock corresponding to the second service data.

The access node and the egress node in the foregoing embodiments may constitute a FlexE system in a single-hop networking mode. The access node generates service frequency information, and the egress node recovers a service clock based on the service frequency information, to implement a function of transparently transmitting a service frequency. The access node, at least one intermediate node, and the egress node may constitute a FlexE system in a multi-hop cascading networking mode. The access node generates service frequency information, the intermediate node regenerates service frequency information, and the egress node recovers a service clock based on the service frequency information, to implement a function of transparently transmitting a service frequency. The single-hop networking mode has a simple environment, and there is no process of recalculating service frequency information by the intermediate node. It should be understood that a simpler networking environment indicates that transmission damage to service frequency information is less and a recovered service frequency/service clock is more accurate.

The foregoing describes the method for transparently transmitting a service frequency according to the embodiments of this application. The following describes a device for transparently transmitting a service frequency according to an embodiment of this application.

The device for transparently transmitting a service frequency in this application may correspond to a packet bearer device, for example, an Internet Protocol (Internet Protocol, IP) radio access network (Radio Access Network, RAN) device and a packet transport network (Packet Transport Network, PTN) device that plan to load a FlexE. A device at an access node of a network implements functions of generating service frequency information and inserting the service frequency information into a stuff code block in the embodiments of this application, for example, a box-shaped device may implement the functions by using an interface card, or a frame-shaped device may implement the functions by using an interface chip of a line card. A device at an intermediate node of a network implements a function of regenerating service frequency information in the embodiments of this application, for example, a box-shaped device may implement the function by using an interface card, or a frame-shaped device may implement the function by using an interface chip of a line card. A device at an egress node of a network implements a function of recovering a service clock in the embodiments of this application, for example, a box-shaped device may implement the function by using an interface card, or a frame-shaped device may implement the function by using an interface chip of a line card.

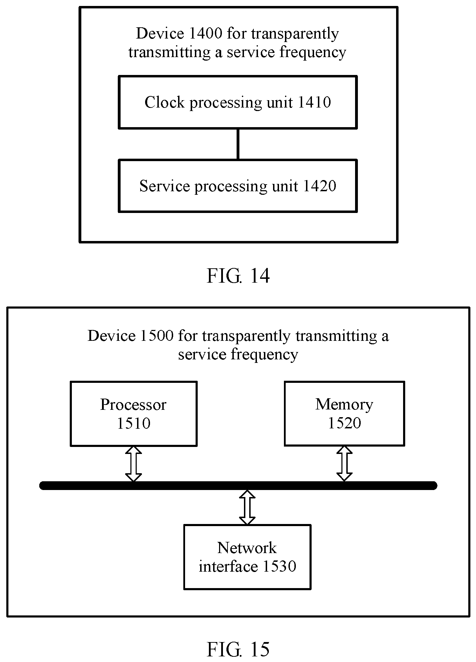

FIG 14 is a schematic block diagram of a device 1400 for transparently transmitting a service frequency according to an embodiment of this application. The device 1400 for transparently transmitting a service frequency is a first device. As shown in FIG 14, the device 1400 for transparently transmitting a service frequency may include:
a clock processing unit 1410, configured to determine first service frequency information Xn, where the first service frequency information Xn is used to indicate an amount of n-bit first service data that is sent by the first device within first statistical duration, a sending frequency of the first device is used as a reference for the first statistical duration, and n is a positive integer; and
a service processing unit 1420, configured to: encapsulate the first service frequency information Xn determined by the clock processing unit 1410 into a first S/T bit code block, insert the first S/T bit code block into a data stream of the first service data, and send the data stream of the first service data to a second device, where S and T are positive integers.

Optionally, in an optional embodiment, the first S/T bit code block is an S/T bit code block identified by O code.

Optionally, in an optional embodiment, first statistical duration information is further encapsulated in the first S/T bit code block, and the first statistical duration information is used to indicate the first statistical duration.

Optionally, in an optional embodiment, the first statistical duration is a first target quantity of transmit clock cycles, and the first statistical duration information includes the first target quantity.

Optionally, in an optional embodiment, the clock processing unit 1410 is further configured to determine the first statistical duration based on a rate of the first service data; and that the clock processing unit 1410 determines the first service frequency information Xn includes: collecting statistics about the amount of n-bit first service data that is sent within the first statistical duration.

Optionally, in an optional embodiment, the service processing unit 1420 is further configured to: receive the data stream of the first service data, where the data stream of the first service data is sent by a third device, and parse out first service frequency information Yn from a second S/T bit code block of the data stream of the first service data; and the clock processing unit 1410 is specifically configured to calculate, based on the first service frequency information Yn, the amount of n-bit first service data that is sent within the first statistical duration, to obtain the first service frequency information Xn.

Optionally, in an optional embodiment, the first statistical duration information is further encapsulated in the second S/T bit code block, and the first statistical duration information is used to indicate the first statistical duration.

Optionally, in an optional embodiment, the clock processing unit 1410 is further configured to determine second service frequency information Wm, where the second service frequency information Wm is used to indicate an amount of m-bit second service data that is sent by the first device within second statistical duration, the sending frequency of the first device is used as a reference for the second statistical duration, and m is a positive integer; and the service processing unit 1420 is further configured to: encapsulate the second service frequency information Wm into a third S/T bit code block, insert the third S/T bit code block into a data stream of the second service data, and send the data stream of the second service data to the second device.

Optionally, in an optional embodiment, the first service frequency information *Xn* = *A*□*F_{client}* / *F_{FlexE},* A is a frequency coefficient, *F_{client}* is a service frequency of the first service data, and *F_{FlexE}* is the sending frequency of the first device.

It should be understood that the clock processing unit 1410 may correspond to the clock processing unit TIMING TX or the clock processing unit TIMING REGENERATE in FIG 9A, FIG 9B, FIG 9C, and FIG 10. The service processing unit 1420 may correspond to the service processing unit, the shim mapping unit, the PHY link, and the like in FIG 9A, FIG 9B, FIG 9C, and FIG 10.

It should be understood that some functions of the clock processing unit 1410 and the service processing unit 1420 in this embodiment of this application may be implemented by a processor or a processor-related circuit component, and some functions of the service processing unit 1420 may be implemented by a network interface or a network interface-related circuit component.

As shown in FIG 15, an embodiment of this application further provides a device 1500 for transparently transmitting a service frequency. The device 1500 for transparently transmitting a service frequency is a first device. The device 1500 for transparently transmitting a service frequency includes a processor 1510, a memory 1520, and a network interface 1530. The memory 1520 is configured to store an instruction. The processor 1510 and the network interface 1530 are configured to execute the instruction stored in the memory 1520.

It should be understood that the device 1400 for transparently transmitting a service frequency shown in FIG 14 or the device 1500 for transparently transmitting a service frequency shown in FIG 15 may be configured to perform an operation or a procedure related to a terminal device in the foregoing method embodiment, and operations and/or functions of the modules in the device 1400 for transparently transmitting a service frequency or the device 1500 for transparently transmitting a service frequency are separately used to implement a corresponding procedure in the foregoing method embodiment. For brevity, details are not described herein again.

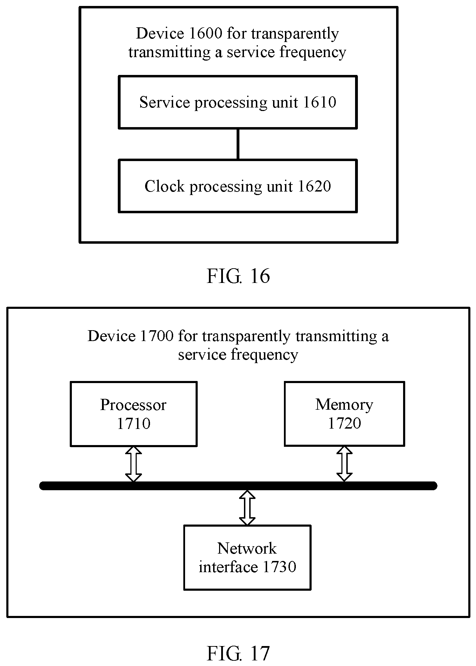

FIG 16 is a schematic block diagram of a device 1600 for transparently transmitting a service frequency according to an embodiment of this application. The device 1600 for transparently transmitting a service frequency is a fourth device. As shown in FIG 16, the device 1600 for transparently transmitting a service frequency may include:
a service processing unit 1610, configured to receive a data stream of first service data, where the data stream of the first service data is sent by a fifth device, the data stream of the first service data includes a first S/T bit code block, the first S/T bit code block includes first service frequency information Zn, the first service frequency information Zn is used to indicate an amount of n-bit first service data that is sent by the fifth device within first statistical duration, a sending frequency of the fifth device is used as a reference for the first statistical duration, and n, S, and T are positive integers; and
a clock processing unit 1620, configured to recover, based on the first service frequency information Zn, a clock corresponding to the first service data.

Optionally, in an optional embodiment, the first S/T bit code block is an S/T bit code block identified by O code.

Optionally, in an optional embodiment, first statistical duration information is further encapsulated in the first S/T bit code block, and the first statistical duration information is used to indicate the first statistical duration; and the clock processing unit 1620 is specifically configured to recover, based on the first service frequency information Zn and the first statistical duration information, the clock corresponding to the first service data.

Optionally, in an optional embodiment, the first statistical duration is a first target quantity of transmit clock cycles, and the first statistical duration information includes the first target quantity.

Optionally, in an optional embodiment, the service processing unit 1610 is further configured to receive a data stream of second service data, where the data stream of the second service data is sent by the fifth device, the data stream of the second service data includes a second S/T bit code block, the second S/T bit code block includes second service frequency information Vm, the second service frequency information Vm is used to indicate an amount of n-bit second service data that is sent by the fifth device within second statistical duration, the sending frequency of the fifth device is used as a reference for the second statistical duration, and m is a positive integer; and the clock processing unit 1620 is further configured to recover, based on the second service frequency information Vm, a clock corresponding to the second service data.

Optionally, in an optional embodiment, the first service frequency information *Zn* = *A*□*F_{client}* / *F_{FlexE},* A is a frequency coefficient, *F_{client}* is a service frequency of the first service data, and *F_{FlexE}* is the sending frequency of the fifth device.

It should be understood that the clock processing unit 1620 may correspond to the clock processing unit TIMING RX in FIG 9A, FIG 9B, FIG 9C, and FIG 10. The service processing unit 1610 may correspond to the service processing unit, the shim demapping unit, the PHY link, and the like in FIG 9A, FIG 9B, FIG. 9C, and FIG 10.

It should be understood that some functions of the clock processing unit 1620 and the service processing unit 1610 in this embodiment of this application may be implemented by a processor or a processor-related circuit component, and some functions of the service processing unit 1610 may be implemented by a network interface or a network interface-related circuit component.

As shown in FIG 17, an embodiment of this application further provides a device 1700 for transparently transmitting a service frequency. The device 1700 for transparently transmitting a service frequency is a fourth device. The device 1700 for transparently transmitting a service frequency includes a processor 1710, a memory 1720, and a network interface 1730. The memory 1720 is configured to store an instruction. The processor 1710 and the network interface 1730 are configured to execute the instruction stored in the memory 1720.

It should be understood that, the processor mentioned in the embodiments of this application may be a central processing unit (Central Processing Unit, CPU), or may be another general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general purpose processor may be a microprocessor or the processor may be any conventional processor, or the like.

It should be further understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. For example but not for limitation, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general purpose processor, a DSP, an ASIC, an FPGA or another programmable logic device, a discrete gate or a transistor logic device, or a discrete hardware component, the memory (storage module) is integrated into the processor.

It should be noted that the memory described in this specification aims to include but is not limited to these memories and any memory of another proper type.

An embodiment of this application further provides a computer-readable storage medium. The computer-readable storage medium stores an instruction. When the instruction runs on a computer, the computer is enabled to perform the methods in the foregoing method embodiments. Specifically, the computer may be the foregoing first device or the foregoing fourth device.

An embodiment of this application further provides a computer program product including an instruction. When a computer runs the instruction of the computer program product, the computer is enabled to perform the method in the foregoing method embodiment. Specifically, the computer program product may run on the foregoing first device or the foregoing fourth device.

All or some of the foregoing embodiments may be implemented by using software, hardware, firmware, or any combination thereof. When software is used to implement the embodiments, the embodiments may be all or partially implemented in a form of a computer program product. The computer program product includes one or more computer instructions. When the computer instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid state disk (Solid State Disk, SSD)), or the like.

It should be understood that the first, the second, and various numbers in this specification are used for differentiation only for ease of description, instead of limiting the scope of this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transparently transmitting a service frequency, applicable to a flexible Ethernet, FlexE, comprising:
determining, by a first device, first service frequency information Xn, wherein the first service frequency information Xn is used to indicate an amount of n-bit first service data that is sent by the first device within first statistical duration, a sending frequency of the first device is used as a reference for the first statistical duration, and n is a positive integer, wherein the first statistical duration is determined based on a rate of the first service data; and
encapsulating, by the first device, the first service frequency information Xn into a first S/T bit code block, inserting the first S/T bit code block into a data stream of the first service data, and sending the data stream of the first service data to a second device, wherein S and T are positive integers.

2. The method according to claim 1, wherein first statistical duration information is further encapsulated in the first S/T bit code block, and the first statistical duration information is used to indicate the first statistical duration.

3. The method according to claim 1 or 2, wherein the method further comprises:
receiving, by the first device, the data stream of the first service data, wherein the data stream of the first service data is sent by a third device, and parsing out first service frequency information Yn from a second S/T bit code block of the data stream of the first service data; and
the determining, by a first device, first service frequency information Xn comprises:
calculating, by the first device based on the first service frequency information Yn, the amount of n-bit first service data that is sent within the first statistical duration, to obtain the first service frequency information Xn.

4. The method according to any one of claims 1 to 3, wherein the first service frequency information Xn is expressed as *Xn*=*A•F_{client}*/*F_{FlexE},* A is a frequency coefficient, *F_{client}* is a service frequency of the first service data, and *F_{FlexE}* is the sending frequency of the first device.

5. A method for transparently transmitting a service frequency, applicable to a flexible Ethernet, FlexE, comprising:
receiving, by a fourth device, a data stream of first service data, wherein the data stream of the first service data is sent by a fifth device, the data stream of the first service data comprises a first S/T bit code block, the first S/T bit code block comprises first service frequency information Zn, the first service frequency information Zn is used to indicate an amount of n-bit first service data that is sent by the fifth device within first statistical duration, a sending frequency of the fifth device is used as a reference for the first statistical duration, and n, S, and T are positive integers, wherein the first statistical duration is determined based on a rate of the first service data; and
recovering, by the fourth device based on the first service frequency information Zn, a clock corresponding to the first service data.

6. The method according to claim 5, wherein first statistical duration information is further encapsulated in the first S/T bit code block, and the first statistical duration information is used to indicate the first statistical duration; and
the recovering, by the fourth device based on the first service frequency information Zn, a clock corresponding to the first service data comprises:
recovering, by the fourth device based on the first service frequency information Zn and the first statistical duration information, the clock corresponding to the first service data.

7. The method according to claim 6, wherein the first statistical duration is a first target quantity of transmit clock cycles, and the first statistical duration information comprises the first target quantity.

8. The method according to any one of claims 5 to 7, wherein the first service frequency information Zn is expressed as *Zn*=*A•F_{client}*/*F_{FlexE},* A is a frequency coefficient, *F_{client}* is a service frequency of the first service data, and *F_{FlexE}* is the sending frequency of the fifth device.

9. A device (1400) for transparently transmitting a service frequency, applicable to a flexible Ethernet, FlexE, wherein the device is a first device, comprising:
a clock processing unit (1410), configured to determine first service frequency information Xn, wherein the first service frequency information Xn is used to indicate an amount of n-bit first service data that is sent by the first device within first statistical duration, a sending frequency of the first device is used as a reference for the first statistical duration, and n is a positive integer, wherein the first statistical duration is determined based on a rate of the first service data; and
a service processing unit (1420), configured to: encapsulate the first service frequency information Xn determined by the clock processing unit into a first S/T bit code block, insert the first S/T bit code block into a data stream of the first service data, and send the data stream of the first service data to a second device, wherein S and T are positive integers.

10. The device (1400) according to claim 9, wherein first statistical duration information is further encapsulated in the first S/T bit code block, and the first statistical duration information is used to indicate the first statistical duration.

11. The device (1400) according to claim 9 or 10, wherein the service processing unit (1420) is further configured to:
receive the data stream of the first service data, wherein the data stream of the first service data is sent by a third device, and parse out first service frequency information Yn from a second S/T bit code block of the data stream of the first service data; and
the clock processing unit (1410) is specifically configured to:
calculate, based on the first service frequency information Yn, the amount of n-bit first service data that is sent within the first statistical duration, to obtain the first service frequency information Xn.

12. The device (1400) according to any one of claims 9 to 11, wherein the first service frequency information Xn is expressed as *Xn*= *A•F_{client}*/*F_{FlexE},* A is a frequency coefficient, *F_{client}* is a service frequency of the first service data, and *F_{FlexE}* is the sending frequency of the first device.

13. A device (1600) for transparently transmitting a service frequency, applicable to a flexible Ethernet, FlexE, wherein the device is a fourth device, comprising:
a service processing unit (1610), configured to receive a data stream of first service data, wherein the data stream of the first service data is sent by a fifth device, the data stream of the first service data comprises a first S/T bit code block, the first S/T bit code block comprises first service frequency information Zn, the first service frequency information Zn is used to indicate an amount of n-bit first service data that is sent by the fifth device within first statistical duration, a sending frequency of the fifth device is used as a reference for the first statistical duration, and n, S, and T are positive integers, wherein the first statistical duration is determined based on a rate of the first service data; and
a clock processing unit (1620), configured to recover, based on the first service frequency information Zn, a clock corresponding to the first service data.

14. The device (1600) according to claim 13, wherein first statistical duration information is further encapsulated in the first S/T bit code block, and the first statistical duration information is used to indicate the first statistical duration; and
the clock processing unit (1620) is specifically configured to:
recover, based on the first service frequency information Zn and the first statistical duration information, the clock corresponding to the first service data.

15. The device (1600) according to claim 13 or 14, wherein the first service frequency information Zn is expressed as *Zn*=*A•F_{client}*/*F_{FlexE},* A is a frequency coefficient, *F_{client}* is a service frequency of the first service data, and *F_{FlexE}* is the sending frequency of the fifth device.

## Patentansprüche

1. Verfahren zum transparenten Übertragen einer Dienstfrequenz, die auf ein flexibles Ethernet, FlexE, anwendbar ist, das umfasst:
Bestimmen, durch eine erste Vorrichtung, erster Dienstfrequenzinformationen Xn, wobei die ersten Dienstfrequenzinformationen Xn verwendet werden, um eine Menge von ersten n-Bit-Dienstdaten anzugeben, die durch die erste Vorrichtung innerhalb einer ersten statistischen Dauer gesendet wird, eine Sendefrequenz der ersten Vorrichtung als eine Referenz für die erste statistische Dauer verwendet wird und n eine positive ganze Zahl ist, wobei die erste statistische Dauer basierend auf einer Rate der ersten Dienstdaten bestimmt wird; und
Einkapseln, durch die erste Vorrichtung, der ersten Dienstfrequenzinformationen Xn in einen ersten S/T-Bit-Codeblock, Einfügen des ersten S/T-Bit-Codeblocks in einen Datenstrom der ersten Dienstdaten und Senden des Datenstroms der ersten Dienstdaten an eine zweite Vorrichtung, wobei S und T positive ganze Zahlen sind.

2. Verfahren nach Anspruch 1, wobei Informationen der ersten statistischen Dauer ferner in dem ersten S/T-Bit-Codeblock eingekapselt sind und die Informationen der ersten statistischen Dauer verwendet werden, um die erste statistische Dauer anzugeben.

3. Verfahren nach Anspruch 1 oder 2, wobei das Verfahren ferner umfasst:
Empfangen, durch die erste Vorrichtung, des Datenstroms der ersten Dienstdaten, wobei der Datenstrom der ersten Dienstdaten durch eine dritte Vorrichtung gesendet wird, und Ausparsen von ersten Dienstfrequenzinformationen Yn aus einem zweiten S/T-Bit-Codeblock des Datenstroms der ersten Dienstdaten; und
das Bestimmen, durch eine erste Vorrichtung, erster Dienstfrequenzinformationen Xn umfasst:
Berechnen, durch die erste Vorrichtung basierend auf den ersten Dienstfrequenzinformationen Yn, der Menge an ersten n-Bit-Dienstdaten, die innerhalb der ersten statistischen Dauer gesendet wird, um die ersten Dienstfrequenzinformationen Xn zu erhalten.

4. Verfahren nach einem der Ansprüche 1 bis 3, wobei die ersten Dienstfrequenzinformationen Xn als *Xn*=*A•F_{Client}*/*F_{FlexE}* ausgedrückt werden, A ein Frequenzkoeffizient ist, *F_{Client}* eine Dienstfrequenz der ersten Dienstdaten ist und *F_{FlexE}* die Sendefrequenz der ersten Vorrichtung ist.

5. Verfahren zum transparenten Übertragen einer Dienstfrequenz, die auf ein flexibles Ethernet, FlexE, anwendbar ist, das umfasst:
Empfangen, durch eine vierte Vorrichtung, eines Datenstroms von ersten Dienstdaten, wobei der Datenstrom der ersten Dienstdaten durch eine fünfte Vorrichtung gesendet wird, der Datenstrom der ersten Dienstdaten einen ersten S/T-Bit-Codeblock umfasst, der erste S/T-Bit-Codeblock erste Dienstfrequenzinformationen Zn umfasst, die ersten Dienstfrequenzinformationen Zn verwendet werden, um eine Menge von ersten n-Bit-Dienstdaten, die durch die fünfte Vorrichtung innerhalb einer ersten statistischen Dauer gesendet wird, anzugeben, eine Sendefrequenz der fünften Vorrichtung als eine Referenz für die erste statistische Dauer verwendet wird, und n, S und T positive ganze Zahlen sind, wobei die erste statistische Dauer basierend auf einer Rate der ersten Dienstdaten bestimmt wird; und
Rückgewinnen, durch die vierte Vorrichtung basierend auf den ersten Dienstfrequenzinformationen Zn, eines Taktes, der den ersten Dienstdaten entspricht.

6. Verfahren nach Anspruch 5, wobei Informationen der ersten statistischen Dauer ferner in dem ersten S/T-Bit-Codeblock eingekapselt sind und die Informationen der ersten statistischen Dauer verwendet werden, um die erste statistische Dauer anzugeben; und das Rückgewinnen, durch die vierte Vorrichtung basierend auf den ersten Dienstfrequenzinformationen Zn, eines Taktes, der den ersten Dienstdaten entspricht, umfasst:
Rückgewinnen, durch die vierte Vorrichtung basierend auf den ersten Dienstfrequenzinformationen Zn und den Informationen der ersten statistischen Dauer,
des Taktes, der den ersten Dienstdaten entspricht.

7. Verfahren nach Anspruch 6, wobei die erste statistische Dauer eine erste Zielanzahl von Übertragungstaktzyklen ist und die Informationen der ersten statistischen Dauer die erste Zielanzahl umfassen.

8. Verfahren nach einem der Ansprüche 5 bis 7, wobei die ersten Dienstfrequenzinformationen Zn als *Zn*=*A*•*F_{Client}*/*F_{FlexE}* ausgedrückt werden, A ein Frequenzkoeffizient ist, *F_{Client}* eine Dienstfrequenz der ersten Dienstdaten ist und *F_{FlexE}* die Sendefrequenz der fünften Vorrichtung ist.

9. Vorrichtung (1400) zum transparenten Übertragen einer Dienstfrequenz, die auf ein flexibles Ethernet, FlexE, anwendbar ist, wobei die Vorrichtung eine erste Vorrichtung ist, die umfasst:
eine Taktverarbeitungseinheit (1410), die konfiguriert ist, um erste Dienstfrequenzinformationen Xn zu bestimmen, wobei die ersten Dienstfrequenzinformationen Xn verwendet werden, um eine Menge von ersten n-Bit-Dienstdaten anzugeben, die durch die erste Vorrichtung innerhalb einer ersten statistischen Dauer gesendet werden, eine Sendefrequenz der ersten Vorrichtung als eine Referenz für die erste statistische Dauer verwendet wird und n eine positive ganze Zahl ist, wobei die erste statistische Dauer basierend auf einer Rate der ersten Dienstdaten bestimmt wird; und
eine Dienstverarbeitungseinheit (1420), die konfiguriert ist zum: Einkapseln der ersten Dienstfrequenzinformationen Xn, die durch die Taktverarbeitungseinheit bestimmt werden, in einen ersten S/T-Bit-Codeblock, Einfügen des ersten S/T-Bit-Codeblocks in einen Datenstrom der ersten Dienstdaten und Senden des Datenstroms der ersten Dienstdaten an eine zweite Vorrichtung, wobei S und T positive ganze Zahlen sind.

10. Vorrichtung (1400) nach Anspruch 9, wobei Informationen der ersten statistischen Dauer ferner in dem ersten S/T-Bit-Codeblock eingekapselt sind und die Informationen der ersten statistischen Dauer verwendet werden, um die erste statistische Dauer anzugeben.

11. Vorrichtung (1400) nach Anspruch 9 oder 10, wobei die Dienstverarbeitungseinheit (1420) ferner konfiguriert ist zum:
Empfangen des Datenstroms der ersten Dienstdaten, wobei der Datenstrom der ersten Dienstdaten durch eine dritte Vorrichtung gesendet wird, und Ausparsen erster Dienstfrequenzinformationen Yn aus einem zweiten S/T-Bit-Codeblock des Datenstroms der ersten Dienstdaten; und
die Taktverarbeitungseinheit (1410) speziell konfiguriert ist zum:
Berechnen, basierend auf den ersten Dienstfrequenzinformationen Yn, der Menge an ersten n-Bit-Dienstdaten, die innerhalb der ersten statistischen Dauer gesendet wird, um die ersten Dienstfrequenzinformationen Xn zu erhalten.

12. Vorrichtung (1400) nach einem der Ansprüche 9 bis 11, wobei die ersten Dienstfrequenzinformationen Xn als *Xn=A•F_{Client}*/*F_{FlexE}* ausgedrückt werden, A ein Frequenzkoeffizient ist, *F_{Client}* eine Dienstfrequenz der ersten Dienstdaten ist und *F_{FlexE}* die Sendefrequenz der ersten Vorrichtung ist.

13. Vorrichtung (1600) zum transparenten Übertragen einer Dienstfrequenz, die auf ein flexibles Ethernet, FlexE, anwendbar ist, wobei die Vorrichtung eine vierte Vorrichtung ist, die umfasst:
eine Dienstverarbeitungseinheit (1610), die konfiguriert ist, um einen Datenstrom von ersten Dienstdaten zu empfangen, wobei der Datenstrom der ersten Dienstdaten durch eine fünfte Vorrichtung gesendet wird, der Datenstrom der ersten Dienstdaten einen ersten S/T-Bit-Codeblock umfasst, der erste S/T-Bit-Codeblock erste Dienstfrequenzinformationen Zn umfasst, die ersten Dienstfrequenzinformationen Zn verwendet werden, um eine Menge von ersten n-Bit-Dienstdaten, die durch die fünfte Vorrichtung innerhalb einer ersten statistischen Dauer gesendet werden, anzugeben, eine Sendefrequenz der fünften Vorrichtung als eine Referenz für die erste statistische Dauer verwendet wird und n, S und T positive ganze Zahlen sind, wobei die erste statistische Dauer basierend auf einer Rate der ersten Dienstdaten bestimmt wird; und
eine Taktverarbeitungseinheit (1620), die konfiguriert ist, um basierend auf den ersten Dienstfrequenzinformationen Zn einen Takt, der den ersten Dienstdaten entspricht, rückzugewinnen.

14. Vorrichtung (1600) nach Anspruch 13, wobei Informationen der ersten statistischen Dauer ferner in dem ersten S/T-Bit-Codeblock eingekapselt sind und die Informationen der ersten statistischen Dauer verwendet werden, um die erste statistische Dauer anzugeben; und die Taktverarbeitungseinheit (1620) speziell konfiguriert ist zum:
Rückgewinnen, basierend auf den ersten Dienstfrequenzinformationen Zn und den Informationen der ersten statistischen Dauer, des Taktes, der den ersten Dienstdaten entspricht.

15. Vorrichtung (1600) nach Anspruch 13 oder 14, wobei die ersten Dienstfrequenzinformationen Zn als *Zn*=*A•F_{Client}*/*F_{FlexE}* ausgedrückt werden, A ein Frequenzkoeffizient ist, *F_{Client}* eine Dienstfrequenz der ersten Dienstdaten ist und *F_{FlexE}* die Sendefrequenz der fünften Vorrichtung ist.

## Revendications

1. Procédé de transmission transparente d'une fréquence de service, applicable à un Ethernet flexible, FlexE, comprenant :
la détermination, par un premier dispositif, de premières informations de fréquence de service Xn, dans lequel les premières informations de fréquence de service Xn sont utilisées pour indiquer une quantité de premières données de service à n bits qui sont envoyées par le premier dispositif au cours de la première durée statistique, une fréquence d'envoi du premier dispositif est utilisée comme une référence pour la première durée statistique, et n est un nombre entier positif, dans lequel la première durée statistique est déterminée sur la base d'un débit des premières données de service ; et
l'encapsulation, par le premier dispositif, des premières informations de fréquence de service Xn dans un premier bloc de code de bits S/T, l'insertion du premier bloc de code de bits S/T dans un flux de données des premières données de service, et l'envoi du flux de données des premières données de service à un deuxième dispositif, dans lequel S et T sont des nombres entiers positifs.

2. Procédé selon la revendication 1, dans lequel les premières informations de durée statistique sont en outre encapsulées dans le premier bloc de code de bits S/T, et les premières informations de durée statistique sont utilisées pour indiquer la première durée statistique.

3. Procédé selon la revendication 1 ou 2, dans lequel le procédé comprend en outre :
la réception, par le premier dispositif, du flux de données des premières données de service, dans lequel le flux de données des premières données de service est envoyé par un troisième dispositif, et l'analyse de premières informations de fréquence de service Yn à partir d'un second bloc de code de bits S/T du flux de données des premières données de service ; et
la détermination, par un premier dispositif, de premières informations de fréquence de service Xn comprend :
le calcul, par le premier dispositif sur la base des premières informations de fréquence de service Yn, de la quantité de premières données de service à n bits qui sont envoyées au cours de la première durée statistique, pour obtenir les premières informations de fréquence de service Xn.

4. Procédé selon l'une quelconque des revendications 1 à 3, dans lequel les premières informations de fréquence de service Xn sont exprimées comme *Xn* = *A* • *F_{client}* / *F_{FlexE}*, A est un coefficient de fréquence, *F_{client}* est une fréquence de service des premières données de service, et *F_{FlexE}* est la fréquence d'envoi du premier dispositif.

5. Procédé de transmission transparente d'une fréquence de service, applicable à un Ethernet flexible, FlexE, comprenant :
la réception, par un quatrième dispositif, d'un flux de données de premières données de service, dans lequel le flux de données des premières données de service est envoyé par un cinquième dispositif, le flux de données des premières données de service comprend un premier bloc de code de bits S/T, le premier bloc de code de bits S/T comprend de premières informations de fréquence de service Zn, les premières informations de fréquence de service Zn sont utilisées pour indiquer une quantité de premières données de service à n bits qui sont envoyées par le cinquième dispositif au cours de la première durée statistique, une fréquence d'envoi du cinquième dispositif est utilisée comme une référence pour la première durée statistique, et n, S et T sont des nombres entiers positifs, dans lequel la première durée statistique est déterminée sur la base d'un débit des premières données de service ; et
la récupération, par le quatrième dispositif, sur la base des premières informations de fréquence de service Zn, d'une horloge correspondant aux premières données de service.

6. Procédé selon la revendication 5, dans lequel de premières informations de durée statistique sont en outre encapsulées dans le premier bloc de code de bits S/T, et les premières informations de durée statistique sont utilisées pour indiquer la première durée statistique ; et
la récupération, par le quatrième dispositif sur la base des premières informations de fréquence de service Zn, d'une horloge correspondant aux premières données de service comprend :
la récupération, par le quatrième dispositif, sur la base des premières informations de fréquence de service Zn et des premières informations de durée statistique, de l'horloge correspondant aux premières données de service.

7. Procédé selon la revendication 6, dans lequel la première durée statistique est une première quantité cible de cycles d'horloge de transmission, et les premières informations de durée statistique comprennent la première quantité cible.

8. Procédé selon l'une quelconque des revendications 5 à 7, dans lequel les premières informations de fréquence de service Zn sont exprimées *comme Zn* = *A* • *F_{client}* / *F_{FlexE},* A est un coefficient de fréquence, *F_{client}* est une fréquence de service des premières données de service, et *F_{FlexE}* est la fréquence d'envoi du cinquième dispositif.

9. Dispositif (1400) de transmission transparente d'une fréquence de service, applicable à un Ethernet flexible, FlexE, dans lequel le dispositif est un premier dispositif, comprenant :
une unité de traitement d'horloge (1410), configurée pour déterminer de premières informations de fréquence de service Xn, dans lequel les premières informations de fréquence de service Xn sont utilisées pour indiquer une quantité de premières données de service à n bits qui sont envoyées par le premier dispositif au cours de la première durée statistique, une fréquence d'envoi du premier dispositif est utilisée comme une référence pour la première durée statistique, et n est un nombre entier positif, dans lequel la première durée statistique est déterminée sur la base d'un débit des premières données de service ; et
une unité de traitement de service (1420), configurée pour : encapsuler les premières informations de fréquence de service Xn déterminées par l'unité de traitement d'horloge dans un premier bloc de code de bits S/T, insérer le premier bloc de code de bits S/T dans un flux de données des premières données de service, et envoyer le flux de données des premières données de service à un deuxième dispositif, dans lequel S et T sont des nombres entiers positifs.

10. Dispositif (1400) selon la revendication 9, dans lequel de premières informations de durée statistique sont en outre encapsulées dans le premier bloc de code de bits S/T, et les premières informations de durée statistique sont utilisées pour indiquer la première durée statistique.

11. Dispositif (1400) selon la revendication 9 ou 10, dans lequel l'unité de traitement de service (1420) est en outre configurée pour :
recevoir le flux de données des premières données de service, dans lequel le flux de données des premières données de service est envoyé par un troisième dispositif, et analyser de premières informations de fréquence de service Yn à partir d'un second bloc de code de bits S/T du flux de données des premières données de service ; et
l'unité de traitement d'horloge (1410) est spécifiquement configurée pour :
calculer, sur la base des premières informations de fréquence de service Yn, la quantité de premières données de service à n bits qui sont envoyées au cours de la première durée statistique, afin d'obtenir les premières informations de fréquence de service Xn.

12. Dispositif (1400) selon l'une quelconque des revendications 9 à 11, dans lequel les premières informations de fréquence de service Xn sont exprimées comme *Xn* = *A* • *F_{client}* / *F_{FlexE},* A est un coefficient de fréquence, *F_{client}* est une fréquence de service des premières données de service, et *F_{FlexE}* est la fréquence d'envoi du premier dispositif.

13. Dispositif (1600) de transmission transparente d'une fréquence de service, applicable à un Ethernet flexible, FlexE, dans lequel le dispositif est un quatrième dispositif, comprenant :
une unité de traitement de service (1610), configurée pour recevoir un flux de données de premières données de service, dans lequel le flux de données des premières données de service est envoyé par un cinquième dispositif, le flux de données des premières données de service comprend un premier bloc de code de bits S/T, le premier bloc de code de bits S/T comprend de premières informations de fréquence de service Zn, les premières informations de fréquence de service Zn sont utilisées pour indiquer une quantité de premières données de service à n bits qui sont envoyées par le cinquième dispositif au cours de la première durée statistique, une fréquence d'envoi du cinquième dispositif est utilisée comme une référence pour la première durée statistique, et n, S et T sont des nombres entiers positifs, dans lequel la première durée statistique est déterminée sur la base d'un taux des premières données de service ; et
une unité de traitement d'horloge (1620), configurée pour récupérer, sur la base des premières informations de fréquence de service Zn, une horloge correspondant aux premières données de service.

14. Dispositif (1600) selon la revendication 13, dans lequel de premières informations de durée statistique sont en outre encapsulées dans le premier bloc de code de bits S/T, et les premières informations de durée statistique sont utilisées pour indiquer la première durée statistique ; et
l'unité de traitement d'horloge (1620) est spécifiquement configurée pour :
récupérer, sur la base des premières informations de fréquence de service Zn et des premières informations de durée statistique, l'horloge correspondant aux premières données de service.

15. Dispositif (1600) selon la revendication 13 ou 14, dans lequel les premières informations de fréquence de service Zn sont exprimées comme *Zn* = *A* • *F_{client}* / *F_{FlexE},* A est un coefficient de fréquence, *F_{client}* est une fréquence de service des premières données de service, et *F_{FlexE}* est la fréquence d'envoi du cinquième dispositif.
